(19) Europäisches Patentamt / European Patent Office / Office européen des brevets

(11) **EP 2 940 502 B1**

(12) **EUROPEAN PATENT SPECIFICATION**

(45) Date of publication and mention of the grant of the patent:
**13.09.2017 Bulletin 2017/37**

(51) Int Cl.:
*G02B 6/38* (2006.01)    *H04B 10/25* (2013.01)
*H04B 10/07* (2013.01)

(21) Application number: **14844297.3**

(86) International application number:
**PCT/CN2014/075248**

(22) Date of filing: **14.04.2014**

(87) International publication number:
**WO 2015/035771 (19.03.2015 Gazette 2015/11)**

(54) **METHOD AND APPARATUS FOR FIBER MATCHING IN OPTICAL FIBER AND CABLE NETWORKS, AND OPTICAL FIBER AND CABLE NETWORKS**

VERFAHREN UND VORRICHTUNG FÜR FASERABGLEICH BEI GLASFASER- UND KABELNETZEN SOWIE GLASFASER- UND KABELNETZE

PROCÉDÉ ET APPAREIL DESTINÉS À L'APPARIEMENT DE FIBRES DANS DES RÉSEAUX EN FIBRE OU CÂBLE OPTIQUE ET RÉSEAUX EN FIBRE OU CÂBLE OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.09.2013 CN 201310419833**

(43) Date of publication of application:
**04.11.2015 Bulletin 2015/45**

(73) Proprietor: **Huawei Technologies Co., Ltd.**
**Longgang District**
**Shenzhen, Guangdong 518129 (CN)**

(72) Inventors:
• **ZHAO, Jun**
  **Shenzhen**
  **Guangdong 518129 (CN)**
• **XIONG, Caihui**
  **Shenzhen**
  **Guangdong 518129 (CN)**
• **WU, Shiquan**
  **Shenzhen**
  **Guangdong 518129 (CN)**
• **HONG, Bin**
  **Shenzhen**
  **Guangdong 518129 (CN)**
• **WANG, Haiyan**
  **Shenzhen**
  **Guangdong 518129 (CN)**

(74) Representative: **Maiwald Patentanwalts GmbH**
**Elisenhof**
**Elisenstrasse 3**
**80335 München (DE)**

(56) References cited:
WO-A1-2008/076235    WO-A2-2011/130472
CN-A- 102 608 715    CN-A- 102 611 498
CN-A- 102 684 784    CN-A- 102 684 784
CN-A- 102 752 672    CN-A- 103 217 744
CN-U- 202 870 347    JP-A- H11 252 181
US-A- 5 208 977    US-A- 5 821 510
US-A1- 2008 159 738    US-A1- 2008 159 738
US-A1- 2013 051 794

## Description

## TECHNICAL FIELD

The present invention relates to the field of optical fiber cables, and in particular, to a method and an apparatus used for fiber pairing in an optical fiber cable network and an optical fiber cable network in the field of optical fiber cables.

## BACKGROUND

As a mainstream manner of broadband access, an optical fiber has advantages such as a high communication capacity, a long relay distance, a strong adaptation capability, a small size, light weight, and cost effectiveness, and is widely used in current and future broadband Internet access applications. For an optical cable including a plurality of optical fibers, after both ends of the optical cable are separately connected to devices, a port correspondence between the devices needs to be determined, that is, a fiber pairing operation is required.

US 5 821 510 A describes a system with an exchange housing a plurality of receptacles. The receptacles receive respective optical fibers or wires at one end, and have respective sockets at the other ends thereof. Optically-encoded data is placed on the exchange in association with respective receptacles or groups of receptacles, to uniquely identify the physical location of the receptacles and distinguish the receptacles from other receptacles housed in the exchange. The optically-encoded data for the receptacles can also indicate the type of jumper and/or length of the jumper to be used with the receptacle, as well as the correct routing of the jumper through the exchange, the traffic to be carried thereon and/or the identity of the physical location of the receptacle to be connected to the other end of the jumper.

CN 102 684 784 A describes a jumper fiber connection detection method and a jumper fiber connection detection device. The therein described jumper fiber connection detection method includes the following steps of: receiving first configuration information issued by a management system, wherein the first configuration information comprises port identifications of at least one pair of ports to be connected on optical fiber wiring equipment; receiving second configuration information reported by the optical fiber wiring equipment, wherein the second configuration information comprises port identifications of at least one pair of ports connected on the optical fiber wiring equipment.

WO 2008/076235 A1 describes optical-fiber-based communication systems and networks, and particularly to systems and methods of deploying and maintaining optical fiber networks using radio-frequency identification, RPID, systems and methods.

A fiber pairing method is to use a fiber identifier or a wire tracker to perform fiber pairing. That is, at one end of an optical cable, for example, at an optical distribution frame ("ODF" for short), a light source is used to illuminate a port of a tray, so that light emitted by the light source is injected into the optical cable, where the light source is, for example, a laser diode ("LD" for short) or a light emitting diode ("LED" for short). Then, at the other end of the optical cable, for example, at a fiber distribution terminal ("FDT" for short), a detector is used to detect ports one by one to check whether an optical signal exists, or the ports are observed with eyes to check whether an optical signal exists. When an optical signal is detected or found by observation, a sequence number of a transmit port and a sequence number of a receive port are recorded, so as to complete fiber pairing for an optical fiber in the optical cable.

In this method, operations need to be performed at both ends; that is, a person transmits an optical signal at a transmit end and switches between ports, and another person needs to detect the optical signal on each port at a receive end, which results in very low efficiency in fiber pairing. In addition, manually matching a port connection relationship between the devices is error-prone and highly costly.

Currently, fiber pairing may also be performed by using an optical time domain reflectometer ("OTDR" for short) fiber pairing method, an audio fiber cable identifier ("AFCID" for short) fiber pairing method, or the like. However, in all these methods, operations need to be performed at both ends simultaneously, which results in low efficiency in fiber pairing and high costs for fiber pairing.

## SUMMARY

Embodiments of the present invention provide a method and an apparatus used for fiber pairing in an optical fiber cable network and an optical fiber cable network, so that an operation needs to be performed only at a single end, and a connection relationship between ports can be accurately identified, thereby improving efficiency in fiber pairing.

According to a first aspect, a method used for fiber pairing in an optical fiber cable network is provided, where the optical fiber cable network includes at least two node devices, each node device includes at least two direction-A ports or direction-B ports, the node devices are connected by using an optical cable, and both ends of each optical fiber included in the optical cable are respectively connected to a direction-A port of a node device and a direction-B port of another node device. The method includes: determining direction-A optical fiber lengths of the direction-A ports of each node device of the at least two node devices, and direction-B optical fiber lengths of the direction-B ports of each node device, where the direction-A optical fiber lengths of the direction-A ports of the node device are mutually different, and the direction-B optical fiber lengths of the direction-B ports of the node device are also mutually different; determining direction-A correspondences between the direction-A optical fiber lengths of each node device and the direction-A ports of the node device, and direction-B correspondences between the direction-B optical fiber lengths of each node device and the direction-B ports of the node device; and determining connection relationships between ports of different node devices of the at least two node devices according to connection relationships between the node devices of the at least two node devices, the direction-A correspondences, and the direction-B correspondences. With reference to the first aspect, in a first possible implementation manner of the first aspect, the determining direction-A optical fiber lengths of the direction-A ports of each node device of the at least two node devices, and direction-B optical fiber lengths of the direction-B ports of each node device includes: separately measuring optical fiber lengths at each direction-A port and each direction-B port of a first node device, where the first node device is any node device of the at least two node devices; determining first direction-A ports and first direction-B ports of the first node device, where the first direction-A ports are direction-A ports whose measured optical fiber lengths are mutually different, and the first direction-B ports are direction-B ports whose measured optical fiber lengths are mutually different; and determining the optical fiber lengths measured at the first direction-A ports as direction-A optical fiber lengths of the first direction-A ports, and determining the optical fiber lengths measured at the first direction-B ports as direction-B optical fiber lengths of the first direction-B ports.

With reference to the first possible implementation manner of the first aspect, in a second possible implementation manner of the first aspect, the determining direction-A optical fiber lengths of the direction-A ports of each node device of the at least two node devices, and direction-B optical fiber lengths of the direction-B ports of each node device further includes: determining second direction-A ports and second direction-B ports of the first node device, where the second direction-A ports include at least two direction-A ports whose measured optical fiber lengths are the same and are a first value, and the second direction-B ports include at least two direction-B ports whose measured optical fiber lengths are the same and are a second value; changing optical fiber lengths of the second direction-A ports and optical fiber lengths of the second direction-B ports, so that optical fiber lengths measured at corresponding ports of at least one second node device connected to the second direction-A ports are mutually different, and optical fiber lengths measured at corresponding ports of at least one third node device connected to the second direction-B ports are mutually different; and determining a sum of the first value and a changed value of an optical fiber length of a second direction-A port as a direction-A optical fiber length of the second direction-A port, and determining a sum of the second value and a changed value of an optical fiber length of a second direction-B port as a direction-B optical fiber length of the second direction-B port. With reference to the second possible implementation manner of the first aspect, in a third possible implementation manner of the first aspect, the changing optical fiber lengths of the second direction-A ports and optical fiber lengths of the second direction-B ports includes: separately inserting fiber patch cords with a chip into the second direction-A ports and the second direction-B ports, so that optical fiber lengths measured at corresponding direction-B ports of at least one second node device connected to the second direction-A ports are mutually different, and optical fiber lengths measured at corresponding direction-A ports of at least one third node device connected to the second direction-B ports are mutually different, where changed values of the optical fiber lengths of the second direction-A ports and the second direction-B ports are values of optical fiber lengths of the inserted fiber patch cords. With reference to the third possible implementation manner of the first aspect, in a fourth possible implementation manner of the first aspect, the determining connection relationships between ports of different node devices of the at least two node devices includes: determining the connection relationships between the ports of different node devices of the at least two node devices according to the connection relationships between the node devices of the at least two node devices, and by searching for direction-A optical fiber lengths and direction-B optical fiber lengths of a same size in a direction-A correspondence of the first node device and a direction-B correspondence of the second node device, and/or a direction-B correspondence of the first node device and a direction-A correspondence of the third node device.

With reference to the first aspect, or any one of the first to the fourth possible implementation manners of the first aspect, in a fifth possible implementation manner of the first aspect, the determining connection relationships between ports of different node devices of the at least two node devices includes: determining the connection relationships between the ports of different node devices of the at least two node devices according to the connection relationships between the node devices of the at least two node devices and connection relationships between the optical cable and the node devices, and by searching for direction-A optical fiber lengths and direction-B optical fiber lengths of a same size in the direction-A correspondences and the direction-B correspondences.

With reference to the first aspect, or any one of the first to the fourth possible implementation manners of the first aspect, in a fifth possible implementation manner of the first aspect, the node devices of the at least two node devices include an optical distribution frame ODF and/or a fiber distribution terminal FDT.

With reference to the first aspect, or any one of the first to the fourth possible implementation manners of the first aspect, in a fifth possible implementation manner of the first aspect, the node devices of the at least two node devices include a node device that is capable of reading identification information of a fiber patch cord with a chip.

According to a second aspect, an apparatus used for fiber pairing in an optical fiber cable network is provided, where the optical fiber cable network includes at least two node devices, each node device includes at least two direction-A ports or direction-B ports, the node devices are connected by using an optical cable, and both ends of each optical fiber included in the optical cable are respectively connected to a direction-A port of a node device and a direction-B port of another node device. The apparatus includes: a first determining module, configured to determine direction-A optical fiber lengths of the direction-A ports of each node device of the at least two node devices, and direction-B optical fiber lengths of the direction-B ports of each node device, where the direction-A optical fiber lengths of the direction-A ports of the node device are mutually different, and the direction-B optical fiber lengths of the direction-B ports of the node device are also mutually different; a second determining module, configured to determine direction-A correspondences between the direction-A optical fiber lengths of each node device that are determined by the first determining module and the direction-A ports of the node device, and configured to determine direction-B correspondences between the direction-B optical fiber lengths of each node device that are determined by the first determining module and the direction-B ports of the node device; and a third determining module, configured to determine connection relationships between ports of different node devices of the at least two node devices according to connection relationships between the node devices of the at least two node devices, and the direction-A correspondences and the direction-B correspondences that are determined by the second determining module.

With reference to the second aspect, in a first possible implementation manner of the second aspect, the first determining module includes: a measuring unit, configured to separately measure optical fiber lengths at each direction-A port and each direction-B port of a first node device, where the first node device is any node device of the at least two node devices; a first determining unit, configured to determine first direction-A ports and first direction-B ports of the first node device, where the first direction-A ports are direction-A ports whose optical fiber lengths measured by the measuring unit are mutually different, and the first direction-B ports are direction-B ports whose optical fiber lengths measured by the measuring unit are mutually different; and a second determining unit, configured to determine the optical fiber lengths that are measured, by the measuring unit, at the first direction-A ports as direction-A optical fiber lengths that are of the first direction-A ports and determined by the first determining unit, and determine the optical fiber lengths that are measured, by the measuring unit, at the first direction-B ports as direction-B optical fiber lengths that are of the first direction-B ports and determined by the first determining unit.

With reference to the first possible implementation manner of the second aspect, in a second possible implementation manner of the second aspect, the first determining module further includes: a third determining unit, configured to determine second direction-A ports and second direction-B ports of the first node device, where the second direction-A ports include at least two direction-A ports whose measured optical fiber lengths are the same and are a first value, and the second direction-B ports include at least two direction-B ports whose measured optical fiber lengths are the same and are a second value; a processing unit, configured to change optical fiber lengths of the second direction-A ports determined by the third determining unit, and change optical fiber lengths of the second direction-B ports determined by the third determining unit, so that optical fiber lengths measured at corresponding ports of at least one second node device connected to the second direction-A ports are mutually different, and optical fiber lengths measured at corresponding ports of at least one third node device connected to the second direction-B ports are mutually different; and a fourth determining unit, configured to determine a sum of the first value and a changed value of an optical fiber length of a second direction-A port as a direction-A optical fiber length of the second direction-A port determined by the third determining unit, and determine a sum of the second value and a changed value of an optical fiber length of a second direction-B port as a direction-B optical fiber length of the second direction-B port determined by the third determining unit.

With reference to the second possible implementation manner of the second aspect, in a third possible implementation manner of the second aspect, the processing unit is specifically configured to: separately insert fiber patch cords with a chip into the second direction-A ports and the second direction-B ports, so that optical fiber lengths measured at corresponding direction-B ports of at least one second node device connected to the second direction-A ports are mutually different, and optical fiber lengths measured at corresponding direction-A ports of at least one third node device connected to the second direction-B ports are mutually different, where changed values of the optical fiber lengths of the second direction-A ports and the second direction-B ports are values of optical fiber lengths of the inserted fiber patch cords. With reference to the third possible implementation manner of the second aspect, in a fourth possible implementation manner of the second aspect, the third determining module includes: a fifth determining unit, configured to determine the connection relationships between the ports of different node devices of the at least two node devices according to the connection relationships between the node devices of the at least two node devices, and by searching for direction-A optical fiber lengths and direction-B optical fiber lengths of a same size in a direction-A correspondence of the first node device and a direction-B correspondence of the second node device, and/or a direction-B correspondence of the first node device and a direction-A correspondence of the third node device.

With reference to the second aspect, or any one of the first to the fourth possible implementation manners of the second aspect, in a fifth possible implementation manner of the second aspect, the third determining module includes: a sixth determining unit, configured to determine the connection relationships between the ports of different node devices of the at least two node devices according to the connection relationships between the node devices of the at least two node devices and connection relationships between the optical cable and the node devices, and by searching for direction-A optical fiber lengths and direction-B optical fiber lengths of a same size in the direction-A correspondences and the direction-B correspondences. With reference to the second aspect, or any one of the first to the fourth possible implementation manners of the second aspect, in a fifth possible implementation manner of the second aspect, the node devices of the at least two node devices include an optical distribution frame ODF and/or a fiber distribution terminal FDT.

With reference to the second aspect, or any one of the first to the fourth possible implementation manners of the second aspect, in a fifth possible implementation manner of the second aspect, the node devices of the at least two node devices include a node device that is capable of reading identification information of a fiber patch cord with a chip.

According to a third aspect, an optical fiber cable network is provided. The optical fiber cable network includes: at least two node devices, where each node device includes at least two direction-A ports or direction-B ports, the node devices are connected by using an optical cable, and both ends of each optical fiber included in the optical cable are respectively connected to a direction-A port of a node device and a direction-B port of another node device; an apparatus according to an embodiment of the present invention; and a data communications network DCN, where the DCN communicates with and is connected to the at least two node devices, and communicates with and is connected to the apparatus, and the DCN is configured to transfer control information and/or management information between the at least two node devices and the apparatus.

Based on the foregoing technical solutions, in the method and apparatus used for fiber pairing in an optical fiber cable network and the optical fiber cable network according to the embodiments of the present invention, direction-A and direction-B optical fiber lengths of node devices, and direction-A and direction-B correspondences between the direction-A and direction-B optical fiber lengths and ports are determined, so that an operation needs to be performed only at a single end, and a connection relationship between the ports can be accurately identified according to a connection relationship between node devices, thereby improving efficiency in fiber pairing and reducing costs for fiber pairing.

## BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a schematic architecture diagram of an optical fiber cable network;
FIG. 2 is a schematic flowchart of a method used for fiber pairing in an optical fiber cable network according to an embodiment of the present invention;
FIG. 3 is another schematic flowchart of a method used for fiber pairing in an optical fiber cable network according to an embodiment of the present invention;
FIG. 4 is still another schematic flowchart of a method used for fiber pairing in an optical fiber cable network according to an embodiment of the present invention;
FIG. 5A is a schematic diagram of a connection relationship between node devices in an exemplary optical fiber cable network;
FIG. 5B is a schematic diagram of a connection relationship between optical cables in the optical fiber cable network described in FIG. 5A;
FIG. 6A and FIG. 6B are yet another schematic flowchart of a method used for fiber pairing in an optical fiber cable network according to an embodiment of the present invention;
FIG. 7 is a schematic block diagram of an apparatus used for fiber pairing in an optical fiber cable network according to an embodiment of the present invention;
FIG. 8 is a schematic block diagram of a first determining module according to an embodiment of the present invention;
FIG. 9 is another schematic block diagram of a first determining module according to an embodiment of the present invention;
FIG. 10 is a schematic block diagram of a third determining module according to an embodiment of the present invention;
FIG. 11 is a schematic block diagram of an optical fiber cable network according to an embodiment of the present invention; and
FIG. 12 is another schematic block diagram of an apparatus used for fiber pairing in an optical fiber cable network according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

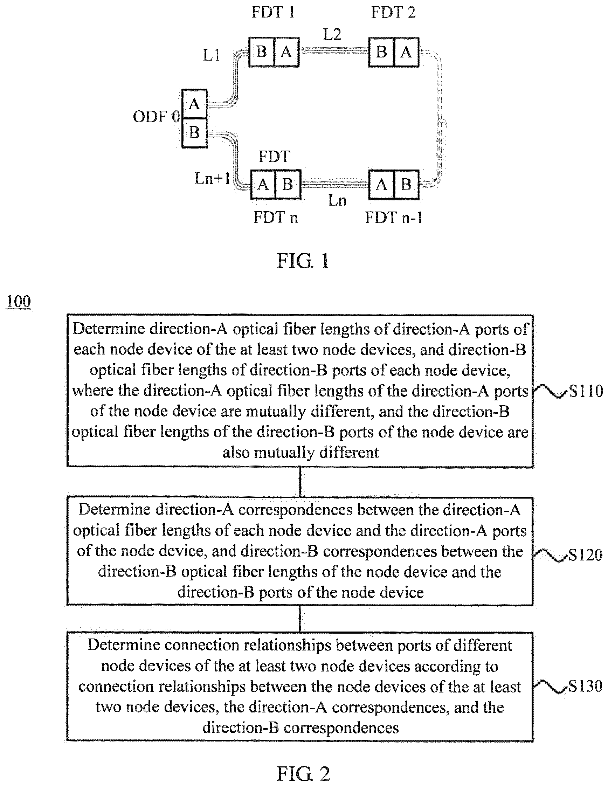

The present invention provides a method and an apparatus used for fiber pairing in an optical fiber cable network. The following first describes, with reference to a schematic architecture diagram of an optical fiber cable network shown in FIG. 1, an optical fiber cable network to which an embodiment of the present invention is applied.

The optical fiber cable network may include at least two node devices, where a node device is, for example, an optical distribution frame ODF or a fiber distribution terminal FDT. For example, the optical fiber cable network shown in FIG. 1 includes one ODF and n (n≤8 and is a positive integer) FDTs, and these node devices form a ring-type optical fiber cable network by using optical cables connected in series, where an optical cable between two node devices is referred to as an optical cable section, and a node device provides space for terminating and splicing (for providing a straight-through connection) of an optical fiber in the optical cable section. For example, a shared fiber may be terminated at each node device, whereas an exclusive fiber may be terminated at only one intermediate node device (FDT), and other optical fibers in the optical cable section, except a shared optical fiber, may be spliced (for providing a straight-through connection) at an intermediate node device.

Generally, each optical cable section has an end A and an end B; one end is terminated or spliced (for providing a straight-through connection) at a node device, and the other end is terminated or spliced (for providing a straight-through connection) at an adjacent node device; and an ODF may serve as a start point and an end point of an entire optical cable, that is, the optical cable is entirely terminated at the ODF. Specifically, assuming that the end A of the optical cable section (the end A of the entire optical cable) is terminated at the ODF, the end B of the optical cable section is definitely terminated at an adjacent node device, for example, terminated at an FDT; by analogy, an end A of the last section of the optical cable is terminated at an FDT n, or after splicing is performed, an end B of the last section of the optical cable is definitely terminated at the ODF.

Similar to an optical cable, a node device may be divided into an outgoing optical cable function area, an incoming optical cable function area, and a device cable distribution function area (not shown in the figure) according to an end type of an optical cable that is accommodated and processed by the node device and a cable distribution function. For ease of description, the outgoing optical cable function area may be referred to as an area A, and the incoming optical cable function area may be referred to as an area B. Correspondingly, a port in the area A may be referred to as an area-A port or a direction-A port, whereas a port in the area B may be referred to as an area-B port or a direction-B port. Similarly, for ease of illustration, directions of an optical cable section may be respectively referred to as a direction A and a direction B; that is, a direction that is opposite to a local node device and points to an adjacent node device may be referred to as a direction A. For example, in an ODF 0 shown in FIG. 1, the direction that points from an area A of the ODF 0 to an area B of an FDT 1 is the direction A. Correspondingly, a direction that is opposite to an adjacent node device and points to a local node device may be referred to as a direction B. For example, the direction that points from an area A of an FDT n to an area B of the ODF 0 is the direction B.

That is, in an optical fiber cable network including at least two node devices, each node device includes at least two direction-A ports or direction-B ports; the node devices are connected by using an optical cable; and both ends of each optical fiber included in the optical cable are respectively connected to a direction-A port of a node device and a direction-B port of another node device.

It should be understood that the embodiments of the present invention are described by using a ring-type optical fiber cable network as an example; however, the embodiments of the present invention are not limited thereto. For example, the optical fiber cable network applied to the embodiments of the present invention may be a chain-type optical fiber cable network, may be a tree-type optical fiber cable network, or may be an optical fiber cable network with another network topology.

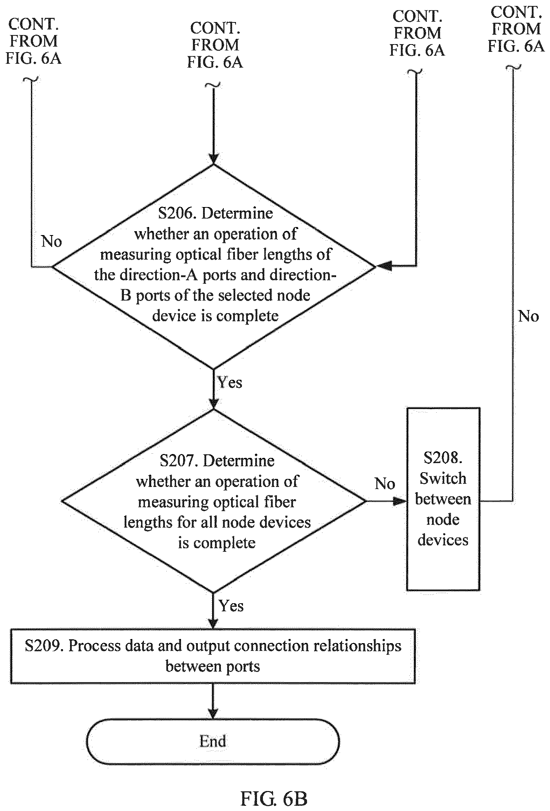

The following describes in detail, with reference to FIG. 2 to FIG. 6A and FIG. 6B, a method used for fiber pairing in an optical fiber cable network according to an embodiment of the present invention, where the optical fiber cable network includes at least two node devices, each node device includes at least two direction-A ports or direction-B ports, the node devices are connected by using an optical cable, and both ends of each optical fiber included in the optical cable are respectively connected to a direction-A port of a node device and a direction-B port of another node device.

As shown in FIG. 2, a method 100 used for fiber pairing in an optical fiber cable network according to this embodiment of the present invention includes:

S110: Determine direction-A optical fiber lengths of the direction-A ports of each node device of the at least two node devices, and direction-B optical fiber lengths of the direction-B ports of each node device, where the direction-A optical fiber lengths of the direction-A ports of the node device are mutually different, and the direction-B optical fiber lengths of the direction-B ports of the node device are also mutually different.

S120: Determine direction-A correspondences between the direction-A optical fiber lengths of each node device and the direction-A ports of the node device, and direction-B correspondences between the direction-B optical fiber lengths of the node device and the direction-B ports of the node device.

S130: Determine connection relationships between ports of different node devices of the at least two node devices according to connection relationships between the node devices of the at least two node devices, the direction-A correspondences, and the direction-B correspondences.

Therefore, in the method used for fiber pairing in an optical fiber cable network in this embodiment of the present invention, direction-A and direction-B optical fiber lengths of node devices, and direction-A and direction-B correspondences between the direction-A and direction-B optical fiber lengths and ports are determined, so that an operation needs to be performed only at a single end, and a connection relationship between the ports can be accurately identified according to a connection relationship between node devices, thereby improving efficiency in fiber pairing and reducing costs for fiber pairing.

In addition, the method used for fiber pairing in an optical fiber cable network according to this embodiment of the present invention is easily implemented by a machine without manual intervention, so as to avoid manual matching of ports. This improves accuracy of fiber pairing and significantly reduces costs.

Specifically, as shown in FIG. 1, it is assumed that a length of an optical cable section between two adjacent node devices is Li, where i = 1, 2, ..., n + 1. Because an optical cable starts from an area A of an ODF 0 and ends in an area B of the ODF 0, a length LLk of an optical fiber starting from the area A of the ODF 0 to an area B of an FDT k meets the following equation (1):

$$LL_k = \sum_{j=1}^{k} L_j, \quad k = 1,2,...,n \quad (1)$$

A length LLm of an optical fiber starting from the area B of the ODF 0 to an area A of an FDT m meets the following equation (2):

$$LL_m = \sum_{j=1}^{n+1} L_j - \sum_{j=1}^{m} L_j, \quad m = 1,2,...,n \quad (2)$$

That is, a length of a direction-A exclusive fiber of the ODF 0 is $\{LL_k = \sum_{j=1}^{k} L_j, k = 1,2,...,n\}$ and a length of a direction-A shared fiber is $\{LL_k, k=1\}$ ; a length of a direction-B exclusive fiber of the ODF 0 is

$\{LL_m = \sum_{j=1}^{n+1} L_j - \sum_{j=1}^{m} L_j, m = 1,2,...,n\}$ and a length of a direction-B shared fiber is $\{LL_k, k=n+1\}$.

Similarly, an exclusive fiber starts from the area A of the ODF 0 and ends at the FDT (1 - n), or starts from an FDT (1 - n) and ends in the area B of the ODF 0, whereas a shared fiber is located only between node devices. Therefore, a length of a direction-A exclusive fiber of an FDT m meets the following equation (3):

$$\{LL_{m,k} = \sum_{j=m}^{n+1} L_j, k = m+1,...,n+1\} \quad (3)$$

A length of a direction-A shared fiber of the FDT m is $\{LL_k, k = m\}$ ; a length of a direction-B exclusive fiber of the FDT m meets the following equation (4):

$$\{LL_m = \sum_{j=1}^{m} L_j, m = 1,...,n\} \quad (4)$$

A length of a direction-B shared fiber of the FDT m is $\{LL_k, k = m + 1\}$.

Therefore, if a direction-A optical fiber length and a direction-B optical fiber length are respectively measured at direction-A ports and direction-B ports of node devices 0 to n, for direction-A ports or direction-B ports of each node device whose measured optical fiber lengths are mutually different, a connection relationship between these ports can be easily determined according to the optical fiber lengths that are obtained through measurement, correspondences between the optical fiber lengths and the ports, and connection relationships between the node devices.

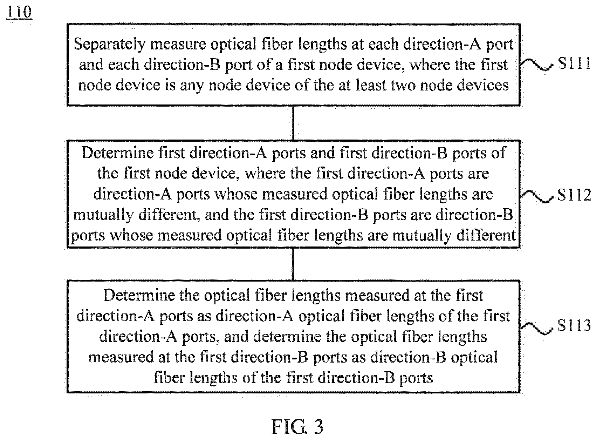

Therefore, in this embodiment of the present invention, optionally, as shown in FIG. 3, the determining direction-A optical fiber lengths of the direction-A ports of each node device of the at least two node devices, and direction-B optical fiber lengths of the direction-B ports of each node device includes:

S111: Separately measure optical fiber lengths at each direction-A port and each direction-B port of a first node device, where the first node device is any node device of the at least two node devices.

S112: Determine first direction-A ports and first direction-B ports of the first node device, where the first direction-A ports are direction-A ports whose measured optical fiber lengths are mutually different, and the first direction-B ports are direction-B ports whose measured optical fiber lengths are mutually different.

S113: Determine the optical fiber lengths measured at the first direction-A ports as direction-A optical fiber lengths of the first direction-A ports, and determine the optical fiber lengths measured at the first direction-B ports as direction-B optical fiber lengths of the first direction-B ports.

Specifically, for example, it is assumed that optical fiber lengths are separately measured at seven direction-A ports of the first node device, where the optical fiber lengths measured at two direction-A ports A1 and A2 are a1; the optical fiber lengths measured at three direction-A ports A3, A4, and A5 are a2; the optical fiber length measured at a direction-A port A6 is a3; and the optical fiber length measured at a direction-A port A7 is a4. The port A6 without a same measured optical fiber length may be determined as a first direction-A port, or the port A7 may be determined as a first direction-A port. In addition, corresponding ports whose measured optical fiber lengths are the same may be determined as the second direction-A ports. For example, the ports A1 and A2 may be determined as the second direction-A ports, or the ports A3, A4, and A5 may be determined as the second direction-A ports.

That is, for the first node device, the first direction-A ports are also direction-A ports with a unique measured optical fiber length. Similarly, the first direction-B ports are direction-B ports without a same measured optical fiber length; that is, the first direction-B ports are also direction-B ports with a unique measured optical fiber length. Because an optical fiber length of a first direction-A port is unique in a direction A of the first node device, a connection relationship between a first direction-A port and a corresponding direction-B port can be easily determined according to the optical fiber length and a connection relationship between the node devices. Similarly, a connection relationship between a first direction-B port and a corresponding direction-A port can be easily determined.

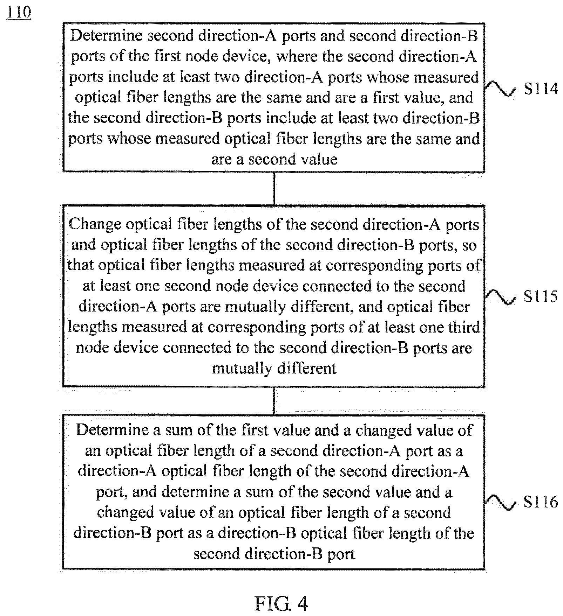

The foregoing describes a method for processing a port with a unique optical fiber length in direction-A ports or direction-B ports of a node device. Similarly, for direction-A ports or direction-B ports whose measured optical fiber lengths are the same on a node device, the optical fiber lengths may be changed, so that a value of an optical fiber length is also unique in the direction-A ports or direction-B ports of the node device, and a correspondence between these ports can also be easily determined. Therefore, in this embodiment of the present invention, optionally, as shown in FIG. 4, the determining direction-A optical fiber lengths of the direction-A ports of each node device of the at least two node devices, and direction-B optical fiber lengths of the direction-B ports of each node device further includes:

S114: Determine second direction-A ports and second direction-B ports of the first node device, where the second direction-A ports include at least two direction-A ports whose measured optical fiber lengths are the same and are a first value, and the second direction-B ports include at least two direction-B ports whose measured optical fiber lengths are the same and are a second value.

S115: Change optical fiber lengths of the second direction-A ports and optical fiber lengths of the second direction-B ports, so that optical fiber lengths measured at corresponding ports of at least one second node device connected to the second direction-A ports are mutually different, and optical fiber lengths measured at corresponding ports of at least one third node device connected to the second direction-B ports are mutually different.

S116: Determine a sum of the first value and a changed value of an optical fiber length of a second direction-A port as a direction-A optical fiber length of the second direction-A port, and determine a sum of the second value and a changed value of an optical fiber length of a second direction-B port as a direction-B optical fiber length of the second direction-B port.

The foregoing example is still used. Corresponding ports whose measured optical fiber lengths are the same are determined as second direction-A ports. For example, the ports A1 and A2 may be determined as the second direction-A ports, or the ports A3, A4, and A5 may be determined as the second direction-A ports.

For the direction-A ports A1 and A2, a length of an optical fiber connected to the port A1 may be changed, or a length of an optical fiber connected to the port A2 may be changed, or the lengths of the two optical fibers may both be changed; and a changed optical fiber length is different from a direction-A optical fiber length of another direction-A port of the node device, so that a changed direction-A optical fiber length of a port is unique in all direction-A optical fiber lengths of the node device, the optical fiber lengths measured at corresponding ports of at least one second node device connected to the second direction-A ports are mutually different, and therefore these second direction-A ports can be easily differentiated. Similarly, a changed direction-B optical fiber length of a direction-B port also needs to be unique in all direction-B optical fiber lengths of the node device, that is, optical fiber lengths measured at corresponding ports of at least one third node device connected to the second direction-B ports are mutually different.

It should be understood that the second node device and the third node device may be a same node device, or may be different node devices.

It should further be understood that, in this embodiment of the present invention, when the first node device includes only direction-A ports or direction-B ports, correspondingly, optical fiber lengths only need to be measured at the direction-A ports or the direction-B ports, and only direction-A optical fiber lengths of the first direction-A ports need to be determined, or only direction-B optical fiber lengths of the first direction-B ports need to be determined.

It should further be understood that, in the embodiments of the present invention, sequence numbers of the foregoing processes do not mean execution sequences. The execution sequences of the processes should be determined according to functions and internal logic of the processes, and should not be construed as any limitation on the implementation processes of the embodiments of the present invention.

Therefore, in the method used for fiber pairing in an optical fiber cable network in this embodiment of the present invention, direction-A and direction-B optical fiber lengths of node devices, and direction-A and direction-B correspondences between the direction-A and direction-B optical fiber lengths and ports are determined, so that an operation needs to be performed only at a single end, and a connection relationship between the ports can be accurately identified according to a connection relationship between node devices, thereby improving efficiency in fiber pairing and reducing costs for fiber pairing.

In this embodiment of the present invention, optionally, the changing optical fiber lengths of the second direction-A ports and optical fiber lengths of the second direction-B ports includes:

separately inserting fiber patch cords with a chip into the second direction-A ports and the second direction-B ports, so that optical fiber lengths measured at corresponding direction-B ports of at least one second node device connected to the second direction-A ports are mutually different, and optical fiber lengths measured at corresponding direction-A ports of at least one third node device connected to the second direction-B ports are mutually different, where changed values of the optical fiber lengths of the second direction-A ports and the second direction-B ports are values of optical fiber lengths of the inserted fiber patch cords. For example, fiber patch cords with a chip that have different lengths are separately inserted into the second direction-A ports, or fiber patch cords having a same length but different quantities are separately inserted into the second direction-A ports, so that optical fiber lengths measured at corresponding direction-B ports of at least one second node device connected to the second direction-A ports are mutually different, that is, a changed direction-A optical fiber length of a port is unique in all direction-A optical fiber lengths of the node device.

The foregoing example is still used. For example, a fiber patch cord with a length of 1 m is inserted into the port A3, and a fiber patch cord with a length of 2 m is inserted into the port A4, so that the changed direction-A optical fiber length of a port is unique in all direction-A optical fiber lengths of the node device. For another example, a fiber patch cord with a length of 1 m is inserted into the port A3, and two fiber patch cords with a length of 1 m each are inserted into the port A4. This embodiment of the present invention is described by using this example only, but this embodiment of the present invention is not limited thereto; for example, the direction-A optical fiber length or the direction-B optical fiber length of a port may also be changed in another manner.

A fiber patch cord includes a chip, which can record an identifier of the fiber patch cord. Therefore, information about the fiber patch cord, such as a model and a length, can be learned, and fiber pairing can be more easily implemented by a machine without manual intervention, thereby improving accuracy of fiber pairing, reducing costs, and improving efficiency.

In this embodiment of the present invention, optionally, the determining connection relationships between ports of different node devices of the at least two node devices includes:

determining the connection relationships between the ports of different node devices of the at least two node devices according to the connection relationships between the node devices of the at least two node devices, and by searching for direction-A optical fiber lengths and direction-B optical fiber lengths of a same size in a direction-A correspondence of the first node device and a direction-B correspondence of the second node device, and/or a direction-B correspondence of the first node device and a direction-A correspondence of the third node device.

For example, as shown in FIG. 1, for the direction-A optical fiber lengths and direction-A ports that are included in the direction-A correspondence of the ODF 0, based on the connection relationship between the node devices, the connection relationship between corresponding ports may be determined, in a direction-B correspondence of an FDT i connected to the ODF 0, according to a principle that a direction-A optical fiber length generated by a same optical fiber is equal to another direction-B optical fiber length.

Optionally, in this embodiment of the present invention, the determining connection relationships between ports of different node devices of the at least two node devices includes:

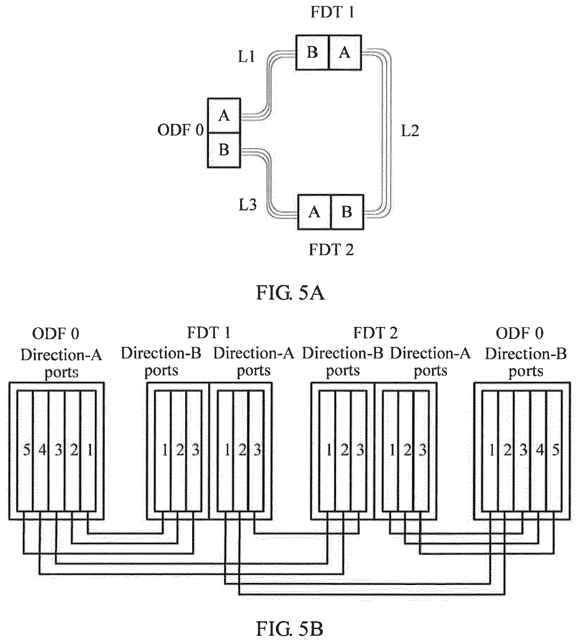

determining the connection relationships between the ports of different node devices of the at least two node devices according to the connection relationships between the node devices of the at least two node devices and connection relationships between the optical cable and the node devices, and by searching for direction-A optical fiber lengths and direction-B optical fiber lengths of a same size in the direction-A correspondences and the direction-B correspondences. For example, FIG. 5A is a schematic diagram of a connection relationship between node devices in an exemplary optical fiber cable network. FIG. 5B is a schematic diagram of a connection relationship between optical cables in the optical fiber cable network described in FIG. 5A. Therefore, the connection relationship between ports can be determined more easily according to a connection relationship between the optical cable and the node device. For example, as shown in FIG. 5B, it can be learned that an optical cable of an area A of an ODF 0 is connected to an FDT 1, and another optical cable of the area A of the ODF 0 is connected to an FDT 2. Therefore, for direction-A optical fiber lengths in a direction-A correspondence of the ODF 0, only corresponding ports with a same optical fiber length need to be queried in a direction-B correspondence of the FDT 1 or the FDT 2, so that a connection relationship between ports can be determined more easily.

In this embodiment of the present invention, optionally, the node devices of the at least two node devices include an optical distribution frame ODF and/or a fiber distribution terminal FDT. Optionally, as an embodiment, the node devices of the at least two node devices include a node device that is capable of reading identification information of a fiber patch cord with a chip.

It should be understood that, in the embodiments of the present invention, sequence numbers of the foregoing processes do not mean execution sequences. The execution sequences of the processes should be determined according to functions and internal logic of the processes, and should not be construed as any limitation on the implementation processes of the embodiments of the present invention.

Therefore, in the method used for fiber pairing in an optical fiber cable network in this embodiment of the present invention, direction-A and direction-B optical fiber lengths of node devices, and direction-A and direction-B correspondences between the direction-A and direction-B optical fiber lengths and ports are determined, so that an operation needs to be performed only at a single end, and a connection relationship between the ports can be accurately identified according to a connection relationship between node devices, thereby improving efficiency in fiber pairing and reducing costs for fiber pairing.

The following describes how to determine a connection relationship between ports according to the method in this embodiment of the present invention by using the optical fiber cable networks shown in FIG. 5A and FIG. 5B as an example.

For example, as shown in FIG. 5A and FIG. 5B, a ring-type optical fiber cable network includes three node devices, that is, an ODF 0, an FDT 1, and an FDT 2, and a distance of an optical cable section between node devices is $\{L_k, k =1,2,3,4\}$. Similarly, for ease of illustration, direction-A ports and direction-B ports of the node device are numbered by using the following rules: Assuming that ports of the ODF and ports of the FDT are not redundant, the ODF includes five direction-A ports and five direction-B ports, which are respectively numbered PA0i (i = 1, 2, ..., 5) and PB0i (i = 1, 2, ..., 5); the FDT includes three direction-A ports and three direction-B ports, which are respectively numbered PA1i (i = 1, 2, 3), PB1i (i = 1, 2, 3), PA2i (i = 1, 2, 3), and PB2i (i = 1, 2, 3).

Under an ideal circumstance in which extra lengths required for connecting and terminating optical fibers are ignored, direction-A ports of the ODF 0 are separately selected for measurement of optical fiber lengths:

ports with a length of L1: {PA01, PA02, PA05}-{PB11, PB12, PB13}, which are respectively corresponding to two groups of exclusive fibers {PA01, PA02}-{PB11, PB12}, and one group of shared fibers {PA05}-{PB13};
ports with a length of L1 + L2: {PA03, PA04}-{PB21, PB22}, which are corresponding to two groups of exclusive fibers.

According to the foregoing optical fiber lengths, the ports can be classified into two groups: {G1, G2} = {{PA01, PA02, PA05}-{PB11, PB12, PB13},{PA03, PA04}-{PB21, PB22}}.

It can be learned that the two groups respectively include three and two members; that is, optical fiber lengths of these direction-A ports are not unique in all direction-A optical fiber lengths of the node device. Therefore, a correspondence between different groups of ports inside each group can be differentiated by using local fiber jumping.

For example, an apparatus used for fiber pairing in an optical fiber cable network can generate a fiber jumping instruction according to a preset algorithm, and insert an optical fiber connection fiber patch cord with an intelligent chip (or referred to as an intelligent fiber patch cord) into a specified port according to the fiber jumping instruction, so that optical fiber lengths of the members in each group of ports are no longer the same, and a connection relationship between the ports in each group can be differentiated, that is, optical fiber groups are confirmed.

For example, one intelligent fiber patch cord with a standard length of 1 m is connected to the port PA02; two intelligent fiber patch cords with a standard length of 1 m each are connected to the port PA05; and one intelligent fiber patch cord with a standard length of 1 m is connected to the port PA04. Apparently, after the foregoing fiber jumping operations are performed, the direction-A ports can be classified into five groups:

{G1, G2, G3, G4, G5} = {{PA01-PB11}, {PA02-PB12}, {PA05-PB13}, {PA03-PB21}, {PA04-PB22}}; after the fiber jumping operations are performed, direction-A optical fiber lengths corresponding to the groups of direction-A ports are:

{{PA01-PB11}, {PA02-PB12}, {PA05-PB13}, {PA03-PB21}, {PA04-PB22}}->{L1, L1 + 1, L1 + 2, L1 + L2, L1 + L2 + 1}.

After the foregoing operations are performed for direction-B ports, the following can be obtained:

ports with a length of L3: {PB03, PB04, PB05}-{PA21, PA22, PA23}, which are respectively corresponding to two groups of exclusive fibers, that is, {PB03, PB04}-{PA21, PA22}, and one group of shared fibers, that is {PB05}-{PA23};
ports with a length of L2 + L3: {PB01, PB02}-{PA11, PA12}, which are corresponding to two groups of exclusive fibers.

According to the foregoing optical fiber lengths, the ports can be classified into two groups: {G1, G2} = {{PB03, PB04, PB05}-{PA21, PA22, PA23},{PB01, PB02}-{PA11, PA12}}.

Similarly, after fiber jumping operations are performed, the direction-B ports of the ODF 0 can be classified into five groups: {G1, G2, G3, G4, G5}={{PB01-PA11}, {PB02-PA12}, {PB05-PA23}, {PB03-PA21}, {PB04-PA22}}; after the fiber jumping operations are performed, direction-B optical fiber lengths corresponding to the groups of direction-B ports are: {{PB0-PA11}, {PB02-PA12}, {PB05-PA13}, {PB03-PA21}, {PB04-PA22}}->{L2 + L3, L2 + L3 + 1, L3 + 2, L3, L3 + 1}.

After an operation of measuring the optical fiber lengths for the ODF 0 is complete, an operation of measuring optical fiber lengths for the FDT 1 is performed. Optical fiber lengths of the direction-B ports of the FDT 1 can be first measured, where:

The measured optical fiber lengths {L1, L1 + 1, L1 + 2} are respectively corresponding to direction-B ports {{PA01-PB11}, {PA02-PB12}, {PA05-PB13}}.

According to the foregoing optical fiber lengths, the ports can be classified into three groups: {G1, G2, G3} = {{PA01-PB11}, {PA02-PB12}, {PA05-PB13}}.

Each group includes one member, that is, a direction-B optical fiber length of a direction-B port of the FDT 1 is unique in all direction-B optical fiber lengths of the node device, and therefore no fiber jumping operation is required. According to a connection relationship between node devices, or according to a connection relationship between node devices and a connection relationship between an optical cable and the node device, and the foregoing related operations performed on the ODF 0, an apparatus used for fiber pairing in an optical fiber cable network can easily confirm three optical fiber groups, that is, {PA01-PB11} (exclusive fiber group 1), {PA02-PB12} (exclusive fiber group 2), and {PA05-PB13} (shared fiber group 1). After the operation of measuring the optical fiber lengths of the direction-B ports of the FDT 1 is complete, an operation of measuring optical fiber lengths of the direction-A ports of the FDT 1 can be performed, and the following can be obtained:

ports with a length of L2: {{PA13-PB23}}, which are corresponding to one group of shared fibers;
ports with a length of L2 + L3: {{PA11-PB01}}, which are corresponding to one group of exclusive fibers;
ports with a length of L2 + L3 + 1: {{PA12-PB02}}, which are corresponding to one group of exclusive fibers.

According to the foregoing optical fiber lengths, the ports can be classified into three groups: {G1, G2, G3} = {{PA13-PB23}, {PA11-PB01}, {PA12-PB02}}.

Apparently, each group includes one member, that is, a direction-A optical fiber length of a direction-A port of the FDT 1 is unique in all direction-A optical fiber lengths of the node device, and therefore no fiber jumping operation is required. According to a connection relationship between node devices, or according to a connection relationship between node devices and a connection relationship between an optical cable and the node device, and the foregoing related operations performed on the ODF 0, an apparatus used for fiber pairing in an optical fiber cable network can easily confirm two optical fiber groups: {PA11-PB01} (exclusive group 3) and {PA12-PB02} (exclusive fiber group 4). However, though the shared fiber group {PA13-PB23} can be uniquely differentiated, the shared fiber group {PA13-PB23} cannot be confirmed because port numbers of the FDT 2 cannot be obtained.

After the operation performed on the FDT 1 is complete, an operation of measuring optical fiber lengths of the direction-B ports of the FDT 2 can be performed, and the following can be obtained:

ports with a length of L2: {{PB23-PA13}}, which are corresponding to one group of shared fibers;
ports with a length of L1 + L2: {{PB11-PA03}}, which are corresponding to one group of exclusive fibers;
ports with a length of L1 + L2 + 1: {PB12-PA04}}, which are corresponding to one group of exclusive fibers.

According to the foregoing optical fiber lengths, the ports can be classified into three groups, and each group includes only one member, and therefore no fiber jumping operation is required. Apparently, three optical fiber groups can be confirmed:

{{PB23-PA13}} (shared fiber group 2), {{PB11-PA03}} (exclusive fiber group 5), and {PB12-PA04}} (exclusive fiber group 6).

After the operation of measuring the optical fiber lengths of the direction-B ports of the FDT 2 is complete, an operation of measuring optical fiber lengths of the direction-A ports of the FDT 2 can be performed, and the following can be obtained:

ports with a length of L3: {{PA21-PB03}}, which are corresponding to one group of exclusive fibers;
ports with a length of L3 + 1: {{PA22-PB04}}, which are corresponding to one group of exclusive fibers;
ports with a length of L3 + 2: {{PA23-PB05}}, which are corresponding to one group of shared fibers.

According to the foregoing optical fiber lengths, the ports can be classified into three groups, and each group includes only one member, and therefore no fiber jumping operation is required. Apparently, an apparatus used for fiber pairing in an optical fiber cable network easily confirms three groups: {{PA21-PB03}} (exclusive fiber group 7), {{PA22-PB04}} (exclusive fiber group), and {{PA23-PB05}} (shared fiber group 3).

An apparatus used for fiber pairing in an optical fiber cable network can determine connection relationships between ports of different node devices of the at least two node devices, according to connection relationships between the node devices of the at least two node devices, the direction-A correspondences, and the direction-B correspondences.

It should be understood that the foregoing specific embodiment is used only as an example to describe this embodiment of the present invention, but the present invention is not limited thereto. For example, an apparatus used for fiber pairing in an optical fiber cable network may further determine a connection relationship between ports based on another rule or policy. For brevity, details are not described herein again.

In addition, it should further be understood that though the foregoing description is provided by using an example of a ring-type optical fiber cable network that includes only three node devices, a person skilled in the art may, by referring to the foregoing method, implement a fiber pairing operation for a ring-type optical fiber cable network that includes more node devices, or perform a similar operation for an optical fiber cable network that is based on another network topology, such as chain type or tree type.

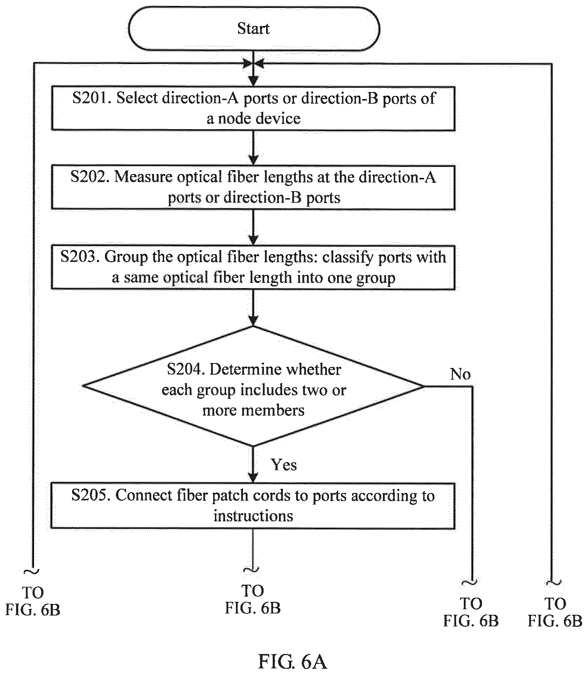

The following describes, with reference to FIG. 6A and FIG. 6B, an entire process of determining a connection relationship between ports. It should be understood that the process is used only as an example to describe this embodiment of the present invention, but the present invention is not limited thereto.

As shown in FIG. 6A and FIG. 6B, in S201, an apparatus used for fiber pairing in an optical fiber cable network may select direction-A ports or direction-B ports of any node device in the optical fiber cable network, and preferably may first select a start node device in the optical fiber cable network.

In S202, measure optical fiber lengths at the direction-A ports or direction-B ports of the selected node device.

In S203, group the optical fiber lengths that are obtained through measurement, that is, classify ports with a same optical fiber length into one group.

In S204, determine whether each group includes two or more members, that is, determine whether a direction-A optical fiber length (or a direction-B optical fiber length) of a direction-A port (or direction-B port) of the selected node device is unique in all direction-A optical fiber lengths (or direction-B optical fiber lengths) of the node device. If the direction-A optical fiber length (or the direction-B optical fiber length) of a direction-A port (or direction-B port) of the selected node device is unique in all direction-A optical fiber lengths (or direction-B optical fiber lengths) of the node device, the process goes to S205. If the direction-A optical fiber length (or the direction-B optical fiber length) of a direction-A port (or direction-B port) of the selected node device is not unique in all direction-A optical fiber lengths (or direction-B optical fiber lengths) of the node device, the process goes to S206.

In S205, perform a fiber jumping operation on corresponding ports in a group with two or more members, that is, connect fiber patch cords to these corresponding ports, so as to change the direction-A optical fiber lengths (or the direction-B optical fiber lengths), so that a direction-A optical fiber length (or a direction-B optical fiber length) of a corresponding port is unique in all direction-A optical fiber lengths (or direction-B optical fiber lengths) of the node device.

In S206, determine whether an operation of measuring optical fiber lengths of the direction-A ports and direction-B ports of the selected node device is complete. If the operation of measuring the optical fiber lengths of the direction-A ports and direction-B ports of the selected node device is complete, the process goes to S207; if the operation of measuring the optical fiber lengths of the direction-A ports and direction-B ports of the selected node device is not complete, the process goes to S201.

In S207, determine whether an operation of measuring optical fiber lengths for all node devices is complete. If the operation of measuring optical fiber lengths for all node devices is complete, the process goes to S209; if the operation of measuring optical fiber lengths for all node devices is not complete, the process goes to S208.

In S208, switch between node devices, that is, repeat the foregoing operations on a next node device. Preferably, sequentially switch between node devices according to a network topology of an optical fiber cable network.

In S209, the apparatus used for fiber pairing in an optical fiber cable network processes data according to connection relationships between the node devices of the at least two node devices, the direction-A correspondences, and the direction-B correspondences, and outputs connection relationships between ports of different node devices of the at least two node devices.

It should be understood that, in the embodiments of the present invention, sequence numbers of the foregoing processes do not mean execution sequences. The execution sequences of the processes should be determined according to functions and internal logic of the processes, and should not be construed as any limitation on the implementation processes of the embodiments of the present invention.

Therefore, in the method used for fiber pairing in an optical fiber cable network in this embodiment of the present invention, direction-A and direction-B optical fiber lengths of node devices, and direction-A and direction-B correspondences between the direction-A and direction-B optical fiber lengths and ports are determined, so that an operation needs to be performed only at a single end, and a connection relationship between the ports can be accurately identified according to a connection relationship between node devices, thereby improving efficiency in fiber pairing and reducing costs for fiber pairing.

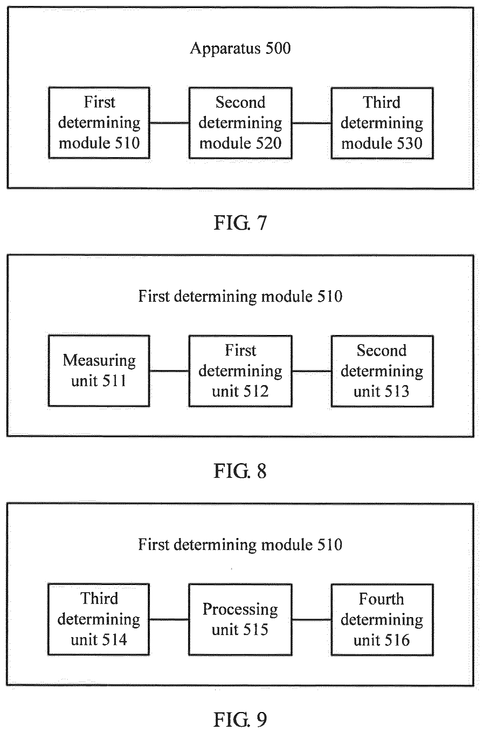

The foregoing describes in detail, with reference to FIG. 1 to FIG. 6A and FIG. 6B, a method for transferring a random access response message according to an embodiment of the present invention. The following describes in detail, with reference to FIG. 7 to FIG. 11, an apparatus used for fiber pairing in an optical fiber cable network and an optical fiber cable network according to embodiments of the present invention.

As shown in FIG. 7, an apparatus 500 according to an embodiment of the present invention is configured to perform fiber pairing in an optical fiber cable network, where the optical fiber cable network includes at least two node devices, each node device includes at least two direction-A ports or direction-B ports, the node devices are connected by using an optical cable, and both ends of each optical fiber included in the optical cable are respectively connected to a direction-A port of a node device and a direction-B port of another node device. The apparatus 500 includes:

a first determining module 510, configured to determine direction-A optical fiber lengths of the direction-A ports of each node device of the at least two node devices, and direction-B optical fiber lengths of the direction-B ports of each node device, where the direction-A optical fiber lengths of the direction-A ports of the node device are mutually different, and the direction-B optical fiber lengths of the direction-B ports of the node device are also mutually different; a second determining module 520, configured to determine direction-A correspondences between the direction-A optical fiber lengths of each node device that are determined by the first determining module 510 and the direction-A ports of the node device, and configured to determine direction-B correspondences between the direction-B optical fiber lengths of each node device that are determined by the first determining module 510 and the direction-B ports of the node device; and a third determining module 530, configured to determine connection relationships between ports of different node devices of the at least two node devices according to connection relationships between the node devices of the at least two node devices, and the direction-A correspondences and the direction-B correspondences that are determined by the second determining module 520.

Therefore, in the apparatus used for fiber pairing in an optical fiber cable network in this embodiment of the present invention, direction-A and direction-B optical fiber lengths of node devices, and direction-A and direction-B correspondences between the direction-A and direction-B optical fiber lengths and ports are determined, so that an operation needs to be performed only at a single end, and a connection relationship between the ports can be accurately identified according to a connection relationship between node devices, thereby improving efficiency in fiber pairing and reducing costs for fiber pairing.

In this embodiment of the present invention, optionally, as shown in FIG. 8, the first determining module 510 includes:

a measuring unit 511, configured to separately measure optical fiber lengths at each direction-A port and each direction-B port of a first node device, where the first node device is any node device of the at least two node devices; a first determining unit 512, configured to determine first direction-A ports and first direction-B ports of the first node device, where the first direction-A ports are direction-A ports whose optical fiber lengths measured by the measuring unit 511 are mutually different, and the first direction-B ports are direction-B ports whose optical fiber lengths measured by the measuring unit 511 are mutually different; and a second determining unit 513, configured to determine the optical fiber lengths that are measured, by the measuring unit 511, at the first direction-A ports as direction-A optical fiber lengths that are of the first direction-A ports and determined by the first determining unit 512, and determine the optical fiber lengths that are measured, by the measuring unit 511, at the first direction-B ports as direction-B optical fiber lengths that are of the first direction-B ports and determined by the first determining unit 512.

In this embodiment of the present invention, optionally, as shown in FIG. 9, the first determining module 510 further includes:

a third determining unit 514, configured to determine second direction-A ports and second direction-B ports of the first node device, where the second direction-A ports include at least two direction-A ports whose measured optical fiber lengths are the same and are a first value, and the second direction-B ports include at least two direction-B ports whose measured optical fiber lengths are the same and are a second value;

a processing unit 515, configured to change optical fiber lengths of the second direction-A ports determined by the third determining unit 514, and change optical fiber lengths of the second direction-B ports determined by the third determining unit 514, so that optical fiber lengths measured at corresponding ports of at least one second node device connected to the second direction-A ports are mutually different, and optical fiber lengths measured at corresponding ports of at least one third node device connected to the second direction-B ports are mutually different; and

a fourth determining unit 516, configured to determine a sum of the first value and a changed value of an optical fiber length of a second direction-A port as a direction-A optical fiber length of the second direction-A port determined by the third determining unit 514, and determine a sum of the second value and a changed value of an optical fiber length of a second direction-B port as a direction-B optical fiber length of the second direction-B port determined by the third determining unit 514.

Optionally, in this embodiment of the present invention, the processing unit 515 is specifically configured to:

separately insert fiber patch cords with a chip into the second direction-A ports and the second direction-B ports, so that optical fiber lengths measured at corresponding direction-B ports of at least one second node device connected to the second direction-A ports are mutually different, and optical fiber lengths measured at corresponding direction-A ports of at least one third node device connected to the second direction-B ports are mutually different, where changed values of the optical fiber lengths of the second direction-A ports and the second direction-B ports are values of optical fiber lengths of the inserted fiber patch cords.

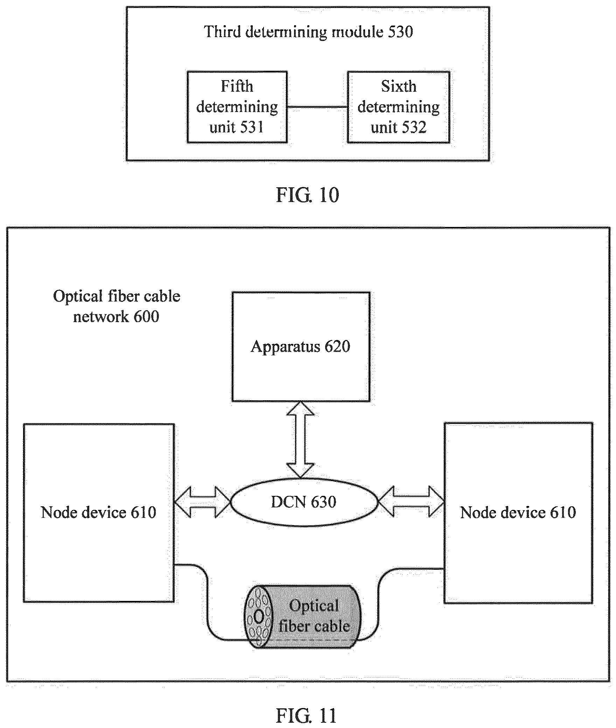

Optionally, in this embodiment of the present invention, as shown in FIG. 10, the third determining module 530 includes: a fifth determining unit 531, configured to determine the connection relationships between the ports of different node devices of the at least two node devices according to the connection relationships between the node devices of the at least two node devices, and by searching for direction-A optical fiber lengths and direction-B optical fiber lengths of a same size in a direction-A correspondence of the first node device and a direction-B correspondence of the second node device, and/or a direction-B correspondence of the first node device and a direction-A correspondence of the third node device.

Optionally, in this embodiment of the present invention, as shown in FIG. 10, the third determining module 530 includes: a sixth determining unit 532, configured to determine the connection relationships between the ports of different node devices of the at least two node devices according to the connection relationships between the node devices of the at least two node devices and connection relationships between the optical cable and the node devices, and by searching for direction-A optical fiber lengths and direction-B optical fiber lengths of a same size in the direction-A correspondences and the direction-B correspondences.

Optionally, in this embodiment of the present invention, node devices of the at least two node devices include an optical distribution frame ODF and/or a fiber distribution terminal FDT.

Optionally, in this embodiment of the present invention, node devices of the at least two node devices include a node device that is capable of reading identification information of a fiber patch cord with a chip.

It should be understood that the apparatus 500 used for fiber pairing in an optical fiber cable network according to this embodiment of the present invention may correspond to an entity for executing the method according to an embodiment of the present invention; the foregoing and other operations and/or functions of the modules in the apparatus 500 are respectively intended to implement corresponding processes of the methods in FIG. 1 to FIG. 6A and FIG. 6B. For brevity, details are not described herein again.

Therefore, in the apparatus used for fiber pairing in an optical fiber cable network in this embodiment of the present invention, direction-A and direction-B optical fiber lengths of node devices, and direction-A and direction-B correspondences between the direction-A and direction-B optical fiber lengths and ports are determined, so that an operation needs to be performed only at a single end, and a connection relationship between the ports can be accurately identified according to a connection relationship between node devices, thereby improving efficiency in fiber pairing and reducing costs for fiber pairing.

As shown in FIG. 11, an embodiment of the present invention further provides an optical fiber cable network 600. The optical fiber cable network 600 includes:

at least two node devices 610, where each node device 610 includes at least two direction-A ports or direction-B ports, the node devices 610 are connected by using an optical cable, and both ends of each optical fiber included in the optical cable are respectively connected to a direction-A port of a node device and a direction-B port of another node device; an apparatus 620 according to an embodiment of the present invention; and a data communications network DCN 630, where the DCN 630 communicates with and is connected to the at least two node devices 610, and communicates with and is connected to the apparatus 620, and the DCN 630 is configured to transfer control information and/or management information between the at least two node devices 610 and the apparatus 620; where:

> the apparatus includes: a first determining module, configured to determine direction-A optical fiber lengths of the direction-A ports of each node device of the at least two node devices, and direction-B optical fiber lengths of the direction-B ports of each node device, where the direction-A optical fiber lengths of the direction-A ports of the node device are mutually different, and the direction-B optical fiber lengths of the direction-B ports of the node device are also mutually different; a second determining module, configured to determine direction-A correspondences between the direction-A optical fiber lengths of each node device that are determined by the first determining module and the direction-A ports of the node device, and configured to determine direction-B correspondences between the direction-B optical fiber lengths of each node device that are determined by the first determining module and the direction-B ports of the node device; and a third determining module, configured to determine connection relationships between ports of different node devices of the at least two node devices according to connection relationships between the node devices of the at least two node devices, and the direction-A correspondences and the direction-B correspondences that are determined by the second determining module.

It should be understood that the apparatus 620 used for fiber pairing in an optical fiber cable network according to this embodiment of the present invention may correspond to an entity for executing the method according to an embodiment of the present invention, and an apparatus 500 according to an embodiment of the present invention; the foregoing and other operations and/or functions of the modules in the apparatus 620 are respectively intended to implement corresponding processes of the methods in FIG. 1 to FIG. 6A and FIG. 6B. For brevity, details are not described herein again. Therefore, in the optical fiber cable network in this embodiment of the present invention, direction-A and direction-B optical fiber lengths of node devices, and direction-A and direction-B correspondences between the direction-A and direction-B optical fiber lengths and ports are determined, so that an operation needs to be performed only at a single end, and a connection relationship between the ports can be accurately identified according to a connection relationship between node devices, thereby improving efficiency in fiber pairing and reducing costs for fiber pairing.

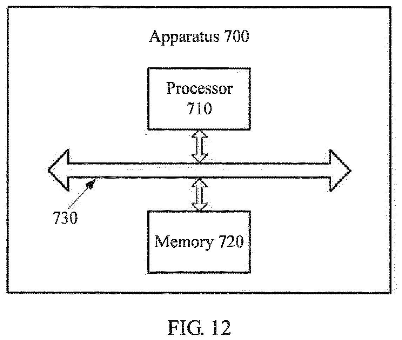

As shown in FIG. 12, an embodiment of the present invention further provides an apparatus 700 used for fiber pairing in an optical fiber cable network, where the apparatus 700 includes a processor 710, a memory 720, and a bus system 730. The processor 710 and the memory 720 are connected by using the bus system 730. The memory 720 is configured to store an instruction. The processor 710 is configured to execute the instruction stored in the memory 720. The optical fiber cable network includes at least two node devices, each node device includes at least two direction-A ports or direction-B ports, the node devices are connected by using an optical cable, and both ends of each optical fiber included in the optical cable are respectively connected to a direction-A port of a node device and a direction-B port of another node device.

The processor 710 is configured to: determine direction-A optical fiber lengths of the direction-A ports of each node device of the at least two node devices, and direction-B optical fiber lengths of the direction-B ports of each node device, where the direction-A optical fiber lengths of the direction-A ports of the node device are mutually different, and the direction-B optical fiber lengths of the direction-B ports of the node device are also mutually different; determine direction-A correspondences between the direction-A optical fiber lengths of each node device and the direction-A ports of the node device, and direction-B correspondences between the direction-B optical fiber lengths of each node device and the direction-B ports of the node device; and determine connection relationships between ports of different node devices of the at least two node devices according to connection relationships between the node devices of the at least two node devices, the direction-A correspondences, and the direction-B correspondences.

Therefore, in the apparatus used for fiber pairing in an optical fiber cable network in this embodiment of the present invention, direction-A and direction-B optical fiber lengths of node devices, and direction-A and direction-B correspondences between the direction-A and direction-B optical fiber lengths and ports are determined, so that an operation needs to be performed only at a single end, and a connection relationship between the ports can be accurately identified according to a connection relationship between node devices, thereby improving efficiency in fiber pairing and reducing costs for fiber pairing.

It should be understood that, in this embodiment of the present invention, the processor 710 may be a central processing unit (Central Processing Unit, "CPU" for short), or the processor 710 may also be another general-purpose processor, a digital signal processor (DSP), an application specific integrated circuit (ASIC), a field programmable gate array (FPGA) or another programmable logic device, a discrete gate or a transistor logic device, a discrete hardware component, or the like. The general-purpose processor may be a microprocessor, or the processor may also be any conventional processor or the like.

The memory 720 may include a read-only memory and a random access memory, and provide an instruction and data to the processor 710. A part of the memory 720 may further include a non-volatile random access memory. For example, the memory 720 may further store device type information.

In addition to a data bus, the bus system 730 may further include a power bus, a control bus, a state signal bus, and the like. However, for clarity, different types of buses are collectively marked as the bus system 730 in the figure.

In an implementation process, steps of the foregoing method may be implemented by an integrated logic circuit of hardware in the processor 710 or by using an instruction in a form of software in the processor 710. The steps of the method disclosed with reference to this embodiment of the present invention may be directly executed by a hardware processor, or be executed by using a combination of a hardware module and a software module in the processor. The software module may be located in a mature storage medium in the prior art, such as a random memory, a flash memory, a read-only memory, a programmable read-only memory, an electrically erasable programmable memory, or a register. The storage medium is located in the memory 720. The processor 710 reads information in the memory 720, and implements the steps of the foregoing method in combination with hardware of the processor 710. To avoid repetition, details are not described herein again.

Optionally, as an embodiment, the determining, by the processor 710, direction-A optical fiber lengths of direction-A ports of each node device of the at least two node devices, and direction-B optical fiber lengths of direction-B ports of each node device includes: separately measuring optical fiber lengths at each direction-A port and each direction-B port of a first node device, where the first node device is any node device of the at least two node devices; determining first direction-A ports and first direction-B ports of the first node device, where the first direction-A ports are direction-A ports whose measured optical fiber lengths are mutually different, and the first direction-B ports are direction-B ports whose measured optical fiber lengths are mutually different; and determining the optical fiber lengths measured at the first direction-A ports as direction-A optical fiber lengths of the first direction-A ports, and determining the optical fiber lengths measured at the first direction-B ports as direction-B optical fiber lengths of the first direction-B ports.

Optionally, as an embodiment, the determining, by the processor 710, direction-A optical fiber lengths of direction-A ports of each node device of the at least two node devices, and direction-B optical fiber lengths of direction-B ports of each node device further includes: determining second direction-A ports and second direction-B ports of the first node device, where the second direction-A ports include at least two direction-A ports whose measured optical fiber lengths are the same and are a first value, and the second direction-B ports include at least two direction-B ports whose measured optical fiber lengths are the same and are a second value; changing optical fiber lengths of the second direction-A ports and optical fiber lengths of the second direction-B ports, so that optical fiber lengths measured at corresponding ports of at least one second node device connected to the second direction-A ports are mutually different, and optical fiber lengths measured at corresponding ports of at least one third node device connected to the second direction-B ports are mutually different; and determining a sum of the first value and a changed value of an optical fiber length of a second direction-A port as a direction-A optical fiber length of the second direction-A port, and determining a sum of the second value and a changed value of an optical fiber length of a second direction-B port as a direction-B optical fiber length of the second direction-B port.

Optionally, as an embodiment, the changing, by the processor 710, optical fiber lengths of the second direction-A ports and optical fiber lengths of the second direction-B ports includes: separately inserting fiber patch cords with a chip into the second direction-A ports and the second direction-B ports, so that optical fiber lengths measured at corresponding direction-B ports of at least one second node device connected to the second direction-A ports are mutually different, and optical fiber lengths measured at corresponding direction-A ports of at least one third node device connected to the second direction-B ports are mutually different, where changed values of the optical fiber lengths of the second direction-A ports and the second direction-B ports are values of optical fiber lengths of the inserted fiber patch cords. Optionally, as an embodiment, the determining, by the processor 710, connection relationships between ports of different node devices of the at least two node devices includes: determining the connection relationships between the ports of different node devices of the at least two node devices according to the connection relationships between the node devices of the at least two node devices, and by searching for direction-A optical fiber lengths and direction-B optical fiber lengths of a same size in a direction-A correspondence of the first node device and a direction-B correspondence of the second node device, and/or a direction-B correspondence of the first node device and a direction-A correspondence of the third node device. Optionally, as an embodiment, the determining, by the processor 710, connection relationships between ports of different node devices of the at least two node devices includes: determining the connection relationships between the ports of different node devices of the at least two node devices according to the connection relationships between the node devices of the at least two node devices and connection relationships between the optical cable and the node devices, and by searching for direction-A optical fiber lengths and direction-B optical fiber lengths of a same size in the direction-A correspondences and the direction-B correspondences.

It should be understood that the apparatus 700 used for fiber pairing in an optical fiber cable network according to this embodiment of the present invention may correspond to an entity for executing the method according to an embodiment of the present invention, and an apparatus 500 and an apparatus 620 according to embodiments of the present invention; the foregoing and other operations and/or functions of the modules in the apparatus 700 are respectively intended to implement corresponding processes of the methods in FIG. 1 to FIG. 6A and FIG. 6B. For brevity, details are not described herein again.

Therefore, in the apparatus used for fiber pairing in an optical fiber cable network in this embodiment of the present invention, direction-A and direction-B optical fiber lengths of node devices, and direction-A and direction-B correspondences between the direction-A and direction-B optical fiber lengths and ports are determined, so that an operation needs to be performed only at a single end, and a connection relationship between the ports can be accurately identified according to a connection relationship between node devices, thereby improving efficiency in fiber pairing and reducing costs for fiber pairing.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that, in the embodiments of the present invention, "B corresponding to A" indicates that B is associated with A, and B may be determined according to A. However, it should further be understood that determining A according to B does not mean that B is determined according to A only; that is, B may also be determined according to A and/or other information.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, a network device, or the like) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method used for fiber pairing in an optical fiber cable network, wherein the optical fiber cable network comprises at least two node devices, each node device comprises at least two direction-A ports or direction-B ports, the node devices are connected by using an optical cable, and both ends of each optical fiber comprised in the optical cable are respectively connected to a direction-A port of a node device and a direction-B port of another node device; **characterized in that** the method comprises:

   determining (S110) direction-A optical fiber lengths of the direction-A ports of each node device of the at least two node devices, and direction-B optical fiber lengths of the direction-B ports of each node device, wherein the direction-A optical fiber lengths of the direction-A ports of the node device are mutually different, and the direction-B optical fiber lengths of the direction-B ports of the node device are also mutually different;
   determining (S120) direction-A correspondences between the direction-A optical fiber lengths of each node device and the direction-A ports of the node device, and direction-B correspondences between the direction-B optical fiber lengths of each node device and the direction-B ports of the node device; and
   determining (S130) connection relationships between ports of different node devices of the at least two node devices according to connection relationships between the node devices of the at least two node devices, the direction-A correspondences, and the direction-B correspondences.

2. The method according to claim 1, wherein the determining direction-A optical fiber lengths of the direction-A ports of each node device of the at least two node devices, and direction-B optical fiber lengths of the direction-B ports of each node device comprises:

   separately measuring optical fiber lengths at each direction-A port and each direction-B port of a first node device, wherein the first node device is any node device of the at least two node devices;
   determining first direction-A ports and first direction-B ports of the first node device, wherein the first direction-A ports are direction-A ports whose measured optical fiber lengths are mutually different, and the first direction-B ports are direction-B ports whose measured optical fiber lengths are mutually different; and
   determining the optical fiber lengths measured at the first direction-A ports as direction-A optical fiber lengths of the first direction-A ports, and determining the optical fiber lengths measured at the first direction-B ports as direction-B optical fiber lengths of the first direction-B ports.

3. The method according to claim 2, wherein the determining direction-A optical fiber lengths of the direction-A ports of each node device of the at least two node devices, and direction-B optical fiber lengths of the direction-B ports of each node device further comprises:

   determining second direction-A ports and second direction-B ports of the first node device, wherein the second direction-A ports comprise at least two direction-A ports whose measured optical fiber lengths are the same and are a first value, and the second direction-B ports comprise at least two direction-B ports whose measured optical fiber lengths are the same and are a second value;
   changing optical fiber lengths of the second direction-A ports and optical fiber lengths of the second direction-B ports, so that optical fiber lengths measured at corresponding ports of at least one second node device connected to the second direction-A ports are mutually different, and optical fiber lengths measured at corresponding ports of at least one third node device connected to the second direction-B ports are mutually different; and
   determining a sum of the first value and a changed value of an optical fiber length of a second direction-A port as a direction-A optical fiber length of the second direction-A port, and determining a sum of the second value and a changed value of an optical fiber length of a second direction-B port as a direction-B optical fiber length of the second direction-B port.

**4.** The method according to claim 3, wherein the changing optical fiber lengths of the second direction-A ports and optical fiber lengths of the second direction-B ports comprises:

> separately inserting fiber patch cords with a chip into the second direction-A ports and the second direction-B ports, so that optical fiber lengths measured at corresponding direction-B ports of at least one second node device connected to the second direction-A ports are mutually different, and optical fiber lengths measured at corresponding direction-A ports of at least one third node device connected to the second direction-B ports are mutually different, wherein changed values of the optical fiber lengths of the second direction-A ports and the second direction-B ports are values of optical fiber lengths of the inserted fiber patch cords.

**5.** The method according to claim 4, wherein the determining connection relationships between ports of different node devices of the at least two node devices comprises:

> determining the connection relationships between the ports of different node devices of the at least two node devices according to the connection relationships between the node devices of the at least two node devices, and by searching for direction-A optical fiber lengths and direction-B optical fiber lengths of a same size in a direction-A correspondence of the first node device and a direction-B correspondence of the second node device, and/or a direction-B correspondence of the first node device and a direction-A correspondence of the third node device.

**6.** The method according to any one of claims 1 to 5, wherein the determining connection relationships between ports of different node devices of the at least two node devices comprises:

> determining the connection relationships between the ports of different node devices of the at least two node devices according to the connection relationships between the node devices of the at least two node devices and connection relationships between the optical cable and the node devices, and by searching for direction-A optical fiber lengths and direction-B optical fiber lengths of a same size in the direction-A correspondences and the direction-B correspondences.

**7.** The method according to any one of claims 1 to 5, wherein the node devices of the at least two node devices comprise an optical distribution frame ODF and/or a fiber distribution terminal FDT.

**8.** An apparatus (500, 620, 700) used for fiber pairing in an optical fiber cable network, wherein the optical fiber cable network comprises at least two node devices, each node device comprises at least two direction-A ports or direction-B ports, the node devices are connected by using an optical cable, and both ends of each optical fiber comprised in the optical cable are respectively connected to a direction-A port of a node device and a direction-B port of another node device; **characterized in that** the apparatus comprises:

> a first determining module (510), configured to determine direction-A optical fiber lengths of the direction-A ports of each node device of the at least two node devices, and direction-B optical fiber lengths of the direction-B ports of each node device, wherein the direction-A optical fiber lengths of the direction-A ports of the node device are mutually different, and the direction-B optical fiber lengths of the direction-B ports of the node device are also mutually different;
> a second determining module (520), configured to determine direction-A correspondences between the direction-A optical fiber lengths of each node device that are determined by the first determining module and the direction-A ports of the node device, and configured to determine direction-B correspondences between the direction-B optical fiber lengths of each node device that are determined by the first determining module and the direction-B ports of the node device; and
> a third determining module (530), configured to determine connection relationships between ports of different node devices of the at least two node devices according to connection relationships between the node devices of the at least two node devices, and the direction-A correspondences and the direction-B correspondences that are determined by the second determining module.

**9.** The apparatus according to claim 8, wherein the first determining module (510) comprises:

> a measuring unit (511), configured to separately measure optical fiber lengths at each direction-A port and each direction-B port of a first node device, wherein the first node device is any node device of the at least two node devices;
> a first determining unit (512), configured to determine first direction-A ports and first direction-B ports of the first node device, wherein the first direction-A ports are direction-A ports whose optical fiber lengths measured by the measuring unit are mutually different, and the first direction-B ports are direction-B ports whose optical fiber lengths measured by the measuring unit are mutually different; and

a second determining unit (513), configured to determine the optical fiber lengths that are measured, by the measuring unit, at the first direction-A ports as direction-A optical fiber lengths that are of the first direction-A ports and determined by the first determining unit, and determine the optical fiber lengths that are measured, by the measuring unit, at the first direction-B ports as direction-B optical fiber lengths that are of the first direction-B ports and determined by the first determining unit.

10. The apparatus according to claim 9, wherein the first determining module further comprises:

a third determining unit (514), configured to determine second direction-A ports and second direction-B ports of the first node device, wherein the second direction-A ports comprise at least two direction-A ports whose measured optical fiber lengths are the same and are a first value, and the second direction-B ports comprise at least two direction-B ports whose measured optical fiber lengths are the same and are a second value;

a processing unit (515), configured to change optical fiber lengths of the second direction-A ports determined by the third determining unit, and change optical fiber lengths of the second direction-B ports determined by the third determining unit, so that optical fiber lengths measured at corresponding ports of at least one second node device connected to the second direction-A ports are mutually different, and optical fiber lengths measured at corresponding ports of at least one third node device connected to the second direction-B ports are mutually different; and

a fourth determining unit (516), configured to determine a sum of the first value and a changed value of an optical fiber length of a second direction-A port as a direction-A optical fiber length of the second direction-A port determined by the third determining unit, and determine a sum of the second value and a changed value of an optical fiber length of a second direction-B port as a direction-B optical fiber length of the second direction-B port determined by the third determining unit.

11. The apparatus according to claim 10, wherein the processing unit is specifically configured to:

separately insert fiber patch cords with a chip into the second direction-A ports and the second direction-B ports, so that optical fiber lengths measured at corresponding direction-B ports of at least one second node device connected to the second direction-A ports are mutually different, and optical fiber lengths measured at corresponding direction-A ports of at least one third node device connected to the second direction-B ports are mutually different, wherein changed values of the optical fiber lengths of the second direction-A ports and the second direction-B ports are values of optical fiber lengths of the inserted fiber patch cords.

12. The apparatus according to claim 11, wherein the third determining module comprises:

a fifth determining unit (531), configured to determine the connection relationships between the ports of different node devices of the at least two node devices according to the connection relationships between the node devices of the at least two node devices, and by searching for direction-A optical fiber lengths and direction-B optical fiber lengths of a same size in a direction-A correspondence of the first node device and a direction-B correspondence of the second node device, and/or a direction-B correspondence of the first node device and a direction-A correspondence of the third node device.

13. The apparatus according to any one of claims 8 to 12, wherein the third determining module comprises:

a sixth determining unit (532), configured to determine the connection relationships between the ports of different node devices of the at least two node devices according to the connection relationships between the node devices of the at least two node devices and connection relationships between the optical cable and the node devices, and by searching for direction-A optical fiber lengths and direction-B optical fiber lengths of a same size in the direction-A correspondences and the direction-B correspondences.

14. The apparatus according to any one of claims 8 to 12, wherein the node devices of the at least two node devices comprise an optical distribution frame ODF and/or a fiber distribution terminal FDT.

15. An optical fiber cable network (600), comprising:

at least two node devices (610), wherein each node device comprises at least two direction-A ports or direction-B ports, the node devices are connected by using an optical cable, and both ends of each optical fiber comprised in the optical cable are respectively connected to a direction-A port of a node device and a direction-B port of another node device;

the apparatus (500, 620, 700) according to any one of claims 8 to 14; and

a data communications network DCN (630), wherein the DCN communicates with and is connected to the at least two node devices, and communicates with and is connected to the apparatus, and the DCN is configured to transfer control information and/or management information between the at least two node devices and the apparatus.

**Patentansprüche**

1. Verfahren, das zur Faserpaarung in einem Optikfaserkabelnetz verwendet wird, wobei das Optikfaserkabelnetz wenigstens zwei Knotenvorrichtungen umfasst, wobei jede Knotenvorrichtung wenigstens zwei Richtung-A-Ports oder Richtung-B-Ports umfasst, wobei die Knotenvorrichtungen durch Verwendung eines optischen Kabels verbunden sind und wobei beide Enden jeder Optikfaser, die in dem optischen Kabel enthalten ist, jeweils mit einem Richtung-A-Port einer Knotenvorrichtung bzw. einem Richtung-B-Port einer anderen Knotenvorrichtung verbunden sind; **dadurch gekennzeichnet, dass** das Verfahren Folgendes umfasst:

Bestimmen (S110) von Richtung-A-Optikfaserlängen der Richtung-A-Ports jeder Knotenvorrichtung der wenigstens zwei Knotenvorrichtungen und von Richtung-B-Optikfaserlängen der Richtung-B-Ports jeder Knotenvorrichtung, wobei die Richtung-A-Optikfaserlängen der Richtung-A-Ports der Knotenvorrichtung voneinander verschieden sind und wobei die Richtung-B-Optikfaserlängen der Richtung-B-Ports der Knotenvorrichtung sich ebenfalls voneinander unterscheiden;
Bestimmen (S120) von Richtung-A-Korrespondenzen zwischen den Richtung-A-Optikfaserlängen jeder Knotenvorrichtung und den Richtung-A-Ports der Knotenvorrichtung und von Richtung-B-Korrespondenzen zwischen den Richtung-B-Optikfaserlängen jeder Knotenvorrichtung und den Richtung-B-Ports der Knotenvorrichtung; und
Bestimmen (S130) von Verbindungsbeziehungen zwischen Ports von verschiedenen Knotenvorrichtungen der wenigstens zwei Knotenvorrichtungen gemäß Verbindungsbeziehungen zwischen den Knotenvorrichtungen der wenigstens zwei Knotenvorrichtungen, den Richtung-A-Korrespondenzen und den Richtung-B-Korrespondenzen.

2. Verfahren nach Anspruch 1, wobei das Bestimmen von Richtung-A-Optikfaserlängen der Richtung-A-Ports jeder Knotenvorrichtung der wenigstens zwei Knotenvorrichtungen und von Richtung-B-Optikfaserlängen der Richtung-B-Ports jeder Knotenvorrichtung Folgendes umfasst:

getrenntes Messen von Optikfaserlängen an jedem Richtung-A-Port und jedem Richtung-B-Port einer ersten Knotenvorrichtung, wobei die erste Knotenvorrichtung eine beliebige Knotenvorrichtung der wenigstens zwei Knotenvorrichtungen ist;
Bestimmen von ersten Richtung-A-Ports und von ersten Richtung-B-Ports der ersten Knotenvorrichtung, wobei die ersten Richtung-A-Ports Richtung-A-Ports sind, deren gemessene Optikfaserlängen voneinander verschieden sind, und wobei die ersten Richtung-B-Ports Richtung-B-Ports sind, deren gemessene Optikfaserlängen voneinander verschieden sind; und
Bestimmen der Optikfaserlängen, die an den ersten Richtung-A-Ports gemessen werden, als Richtung-A-Optikfaserlängen der ersten Richtung-A-Ports und Bestimmen der Optikfaserlängen, die an den ersten Richtung-B-Ports gemessen werden, als Richtung-B-Optikfaserlängen der ersten Richtung-B-Ports.

3. Verfahren nach Anspruch 2, wobei das Bestimmen von Richtung-A-Optikfaserlängen der Richtung-A-Ports jeder Knotenvorrichtung der wenigstens zwei Knotenvorrichtungen und von Richtung-B-Optikfaserlängen der Richtung-B-Ports jeder Knotenvorrichtung ferner Folgendes umfasst:

Bestimmen von zweiten Richtung-A-Ports und von zweiten Richtung-B-Ports der ersten Knotenvorrichtung, wobei die zweiten Richtung-A-Ports wenigstens zwei Richtung-A-Ports umfassen, deren gemessene Optikfaserlängen gleich sind und ein erster Wert sind, und wobei die zweiten Richtung-B-Ports wenigstens zwei Richtung-B-Ports umfassen, deren gemessene Optikfaserlängen gleich sind und ein zweiter Wert sind;
Ändern von Optikfaserlängen der zweiten Richtung-A-Ports und von Optikfaserlängen der zweiten Richtung-B-Ports, so dass Optikfaserlängen, die an entsprechenden Ports von wenigstens einer zweiten Knotenvorrichtung gemessen werden, die mit den zweiten Richtung-A-Ports verbunden ist, voneinander verschieden sind, und so dass Optikfaserlängen, die an entsprechenden Ports von wenigstens einer dritten Knotenvorrichtung gemessen werden, die mit den zweiten Richtung-B-Ports verbunden ist, voneinander verschieden sind; und

Bestimmen einer Summe des ersten Wertes und eines geänderten Wertes einer Optikfaserlänge eines zweiten Richtung-A-Ports als eine Richtung-A-Optikfaserlänge des zweiten Richtung-A-Ports und Bestimmen einer Summe des zweiten Wertes und eines geänderten Wertes einer Optikfaserlänge eines zweiten Richtung-B-Ports als eine Richtung-B-Optikfaserlänge des zweiten Richtung-B-Ports.

4.  Verfahren nach Anspruch 3, wobei das Ändern von Optikfaserlängen der zweiten Richtung-A-Ports und von Optikfaserlängen der zweiten Richtung-B-Ports Folgendes umfasst:

   getrenntes Einfügen von Faserpatchkabeln mit einem Chip in die zweiten Richtung-A-Ports und die zweiten Richtung-B-Ports, so dass die Optikfaserlängen, die an entsprechenden Richtung-B-Ports von wenigstens einer zweiten Knotenvorrichtung gemessen werden, die mit den zweiten Richtung-A-Ports verbunden ist, voneinander verschieden sind und so dass Optikfaserlängen, die an entsprechenden Richtung-A-Ports von wenigstens einer dritten Knotenvorrichtung gemessen werden, die mit den zweiten Richtung-B-Ports verbunden ist, sich voneinander unterscheiden, wobei geänderte Werte der Optikfaserlängen der zweiten Richtung-A-Ports und der zweiten Richtung-B-Ports Werte von Optikfaserlängen der eingefügten Faserpatchkabel sind.

5.  Verfahren nach Anspruch 4, wobei das Bestimmen von Verbindungsbeziehungen zwischen Ports von verschiedenen Knotenvorrichtungen der wenigstens zwei Knotenvorrichtungen Folgendes umfasst:

   Bestimmen der Verbindungsbeziehungen zwischen den Ports von verschiedenen Knotenvorrichtungen der wenigstens zwei Knotenvorrichtungen gemäß den Verbindungsbeziehungen zwischen den Knotenvorrichtungen der wenigstens zwei Knotenvorrichtungen und durch Suchen nach Richtung-A-Optikfaserlängen und Richtung-B-Optikfaserlängen einer gleichen Größe in einer Richtung-A-Korrespondenz der ersten Knotenvorrichtung und einer Richtung-B-Korrespondenz der zweiten Knotenvorrichtung und/oder einer Richtung-B-Korrespondenz der ersten Knotenvorrichtung und einer Richtung-A-Korrespondenz der dritten Knotenvorrichtung.

6.  Verfahren nach einem der Ansprüche 1 bis 5, wobei das Bestimmen von Verbindungsbeziehungen zwischen Ports von verschiedenen Knotenvorrichtungen der wenigstens zwei Knotenvorrichtungen Folgendes umfasst:

   Bestimmen der Verbindungsbeziehungen zwischen den Ports von verschiedenen Knotenvorrichtungen der wenigstens zwei Knotenvorrichtungen gemäß den Verbindungsbeziehungen zwischen den Knotenvorrichtungen der wenigstens zwei Knotenvorrichtungen und den Verbindungsbeziehungen zwischen dem optischen Kabel und den Knotenvorrichtungen und durch Suchen nach Richtung-A-Optikfaserlängen und Richtung-B-Optikfaserlängen einer gleichen Größe in den Richtung-A-Korrespondenzen und den Richtung-B-Korrespondenzen.

7.  Verfahren nach einem der Ansprüche 1 bis 5, wobei die Knotenvorrichtungen der wenigstens zwei Knotenvorrichtungen ein optisches Verteilergestell (ODF: Optical Distribution Frame) und/oder ein Faserverteilerterminal FDT (Fiber Distribution Terminal) umfassen.

8.  Einrichtung (500, 620, 700), die zur Faserpaarung in einem Optikfaserkabelnetz verwendet wird, wobei das Optikfaserkabelnetz wenigstens zwei Knotenvorrichtungen umfasst, wobei jede Knotenvorrichtung wenigstens zwei Richtung-A-Ports oder Richtung-B-Ports umfasst, wobei die Knotenvorrichtungen durch Verwendung eines optischen Kabels verbunden sind und wobei beide Enden jeder Optikfaser, die in dem optischen Kabel enthalten ist, jeweils mit einem Richtung-A-Port einer Knotenvorrichtung bzw. einem Richtung-B-Port einer anderen Knotenvorrichtung verbunden sind; **dadurch gekennzeichnet, dass** die Einrichtung Folgendes umfasst:

   ein erstes Bestimmungsmodul (510), das zum Bestimmen von Richtung-A-Optikfaserlängen der Richtung-A-Ports jeder Knotenvorrichtung der wenigstens zwei Knotenvorrichtungen und von Richtung-B-Optikfaserlängen der Richtung-B-Ports jeder Knotenvorrichtung konfiguriert ist, wobei die Richtung-A-Optikfaserlängen der Richtung-A-Ports der Knotenvorrichtung voneinander verschieden sind und wobei die Richtung-B-Optikfaserlängen der Richtung-B-Ports der Knotenvorrichtung sich ebenfalls voneinander unterscheiden;
   ein zweites Bestimmungsmodul (520), das zum Bestimmen von Richtung-A-Korrespondenzen zwischen den Richtung-A-Optikfaserlängen jeder Knotenvorrichtung, die durch das erste Bestimmungsmodul bestimmt werden, und den Richtung-A-Ports der Knotenvorrichtung konfiguriert ist und das zum Bestimmen von Richtung-B-Korrespondenzen zwischen den Richtung-B-Optikfaserlängen jeder Knotenvorrichtung, die durch das erste Bestimmungsmodul bestimmt werden, und den Richtung-B-Ports der Knotenvorrichtung konfiguriert ist; und ein drittes Bestimmungsmodul (530), das zum Bestimmen von Verbindungsbeziehungen zwischen Ports von verschiedenen Knotenvorrichtungen der wenigstens zwei Knotenvorrichtungen gemäß Verbindungsbeziehungen zwischen den Knotenvorrichtungen der wenigstens zwei Knotenvorrichtungen, den Richtung-A-Korrespondenzen und den Richtung-B-Korrespondenzen, die durch das zweite Bestimmungsmodul bestimmt werden, konfiguriert ist.

9. Einrichtung nach Anspruch 8, wobei das erste Bestimmungsmodul (510) Folgendes umfasst:

eine Messungseinheit (511), die zum getrennten Messen von Optikfaserlängen an jedem Richtung-A-Port und jedem Richtung-B-Port einer ersten Knotenvorrichtung konfiguriert ist, wobei die erste Knotenvorrichtung eine beliebige Knotenvorrichtung der wenigstens zwei Knotenvorrichtungen ist;
eine erste Bestimmungseinheit (512,) die zum Bestimmen von ersten Richtung-A-Ports und von ersten Richtung-B-Ports der ersten Knotenvorrichtung konfiguriert ist, wobei die ersten Richtung-A-Ports Richtung-A-Ports sind, deren durch die Messungseinheit gemessene Optikfaserlängen voneinander verschieden sind, und wobei die ersten Richtung-B-Ports Richtung-B-Ports sind, deren durch die Messungseinheit gemessene Optikfaserlängen voneinander verschieden sind; und
eine zweite Bestimmungseinheit (513), die zum Bestimmen der Optikfaserlängen, die durch die Messungseinheit an den ersten Richtung-A-Ports gemessen werden, als Richtung-A-Optikfaserlängen, die von den ersten Richtung-A-Ports sind und durch die erste Bestimmungseinheit bestimmt werden, und zum Bestimmen der Optikfaserlängen, die durch die Messungseinheit an den ersten Richtung-B-Ports gemessen werden, als Richtung-B-Optikfaserlängen, die von den ersten Richtung-B-Ports sind und durch die erste Bestimmungseinheit bestimmt werden, konfiguriert ist.

10. Einrichtung nach Anspruch 9, wobei das erste Bestimmungsmodul ferner Folgendes umfasst:

eine dritte Bestimmungseinheit (514), die zum Bestimmen von zweiten Richtung-A-Ports und von zweiten Richtung-B-Ports der ersten Knotenvorrichtung konfiguriert ist, wobei die zweiten Richtung-A-Ports wenigstens zwei Richtung-A-Ports umfassen, deren gemessene Optikfaserlängen gleich sind und ein erster Wert sind, und wobei die zweiten Richtung-B-Ports wenigstens zwei Richtung-B-Ports umfassen, deren gemessene Optikfaserlängen gleich sind und ein zweiter Wert sind;
eine Verarbeitungseinheit (515), die zum Ändern von Optikfaserlängen der zweiten Richtung-A-Ports, die durch die dritte Bestimmungseinheit bestimmt werden, und zum Ändern von Optikfaserlängen der zweiten Richtung-B-Ports, die durch die dritte Bestimmungseinheit bestimmt werden, konfiguriert ist, so dass Optikfaserlängen, die an entsprechenden Ports von wenigstens einer zweiten Knotenvorrichtung gemessen werden, die mit den zweiten Richtung-A-Ports verbunden ist, voneinander verschieden sind, und so dass Optikfaserlängen, die an entsprechenden Ports von wenigstens einer dritten Knotenvorrichtung gemessen werden, die mit den zweiten Richtung-B-Ports verbunden ist, voneinander verschieden sind; und
eine vierte Bestimmungseinheit (516), die zum Bestimmen einer Summe des ersten Wertes und eines geänderten Wertes einer Optikfaserlänge eines zweiten Richtung-A-Ports als eine Richtung-A-Optikfaserlänge des zweiten Richtung-A-Ports, die durch die dritte Bestimmungseinheit bestimmt wird, und zum Bestimmen einer Summe des zweiten Wertes und eines geänderten Wertes einer Optikfaserlänge eines zweiten Richtung-B-Ports als eine Richtung-B-Optikfaserlänge des zweiten Richtung-B-Ports, die durch die dritte Bestimmungseinheit bestimmt wird, konfiguriert ist.

11. Einrichtung nach Anspruch 10, wobei die Verarbeitungseinheit speziell zu Folgendem konfiguriert ist:

getrennten Einfügen von Faserpatchkabeln mit einem Chip in die zweiten Richtung-A-Ports und die zweiten Richtung-B-Ports, so dass die Optikfaserlängen, die an entsprechenden Richtung-B-Ports von wenigstens einer zweiten Knotenvorrichtung gemessen werden, die mit den zweiten Richtung-A-Ports verbunden ist, voneinander verschieden sind und so dass Optikfaserlängen, die an entsprechenden Richtung-A-Ports von wenigstens einer dritten Knotenvorrichtung gemessen werden, die mit den zweiten Richtung-B-Ports verbunden ist, sich voneinander unterscheiden, wobei geänderte Werte der Optikfaserlängen der zweiten Richtung-A-Ports und der zweiten Richtung-B-Ports Werte von Optikfaserlängen der eingefügten Faserpatchkabel sind.

12. Einrichtung nach Anspruch 11, wobei das dritte Bestimmungsmodul Folgendes umfasst:

eine fünfte Bestimmungseinheit (531), die zum Bestimmen der Verbindungsbeziehungen zwischen den Ports von verschiedenen Knotenvorrichtungen der wenigstens zwei Knotenvorrichtungen gemäß den Verbindungsbeziehungen zwischen den Knotenvorrichtungen der wenigstens zwei Knotenvorrichtungen und durch Suchen nach Richtung-A-Optikfaserlängen und Richtung-B-Optikfaserlängen einer gleichen Größe in einer Richtung-A-Korrespondenz der ersten Knotenvorrichtung und einer Richtung-B-Korrespondenz der zweiten Knotenvorrichtung und/oder einer Richtung-B-Korrespondenz der ersten Knotenvorrichtung und einer Richtung-A-Korrespondenz der dritten Knotenvorrichtung konfiguriert ist.

13. Einrichtung nach einem der Ansprüche 8 bis 12, wobei das dritte Bestimmungsmodul Folgendes umfasst:

eine sechste Bestimmungseinheit (532), die zum Bestimmen der Verbindungsbeziehungen zwischen den Ports von verschiedenen Knotenvorrichtungen der wenigstens zwei Knotenvorrichtungen gemäß den Verbindungsbeziehungen zwischen den Knotenvorrichtungen der wenigstens zwei Knotenvorrichtungen und den Verbindungsbeziehungen zwischen dem optischen Kabel und den Knotenvorrichtungen und durch Suchen nach Richtung-A-Optikfaserlängen und Richtung-B-Optikfaserlängen einer gleichen Größe in den Richtung-A-Korrespondenzen und den Richtung-B-Korrespondenzen konfiguriert ist.

14. Einrichtung nach einem der Ansprüche 8 bis 12, wobei die Knotenvorrichtungen der wenigstens zwei Knotenvorrichtungen ein optisches Verteilergestell (ODF: Optical Distribution Frame) und/oder ein Faserverteilerterminal FDT (Fiber Distribution Terminal) umfassen.

15. Optikfaserkabelnetz (600), das Folgendes umfasst:

wenigstens zwei Knotenvorrichtungen (610), wobei jede Knotenvorrichtung wenigstens zwei Richtung-A-Ports oder Richtung-B-Ports umfasst, wobei die Knotenvorrichtungen durch Verwendung eines optischen Kabels verbunden sind und wobei beide Enden jeder Optikfaser, die in dem optischen Kabel enthalten ist, jeweils mit einem Richtung-A-Port einer Knotenvorrichtung bzw. einem Richtung-B-Port einer anderen Knotenvorrichtung verbunden sind; die Einrichtung (500, 620, 700) nach einem der Ansprüche 8 bis 14; und ein Datenkommunikationsnetz (630) (DCN: Data Communications Network), wobei das DCN mit den wenigstens zwei Knotenvorrichtungen kommuniziert und mit diesen verbunden ist und mit der Einrichtung kommuniziert und mit dieser verbunden ist und wobei das DCN zum Übertragen von Steuerinformationen und/oder Verwaltungsinformationen zwischen den wenigstens zwei Knotenvorrichtungen und der Einrichtung konfiguriert ist.

## Revendications

1. Procédé utilisé pour l'appariement de fibres dans un réseau de câbles à fibre optique, dans lequel le réseau de câbles à fibre optique comprend au moins deux dispositifs de noeuds, chaque dispositif de noeud comprend au moins deux ports de direction A ou ports de direction B, les dispositifs de noeuds sont connectés au moyen d'un câble optique, et les deux extrémités de chaque fibre optique contenue dans le câble optique sont respectivement connectées à un port de direction A d'un dispositif de noeud et à un port de direction B d'un autre dispositif de noeud ; **caractérisé en ce que** le procédé comprend :

la détermination (S110) de longueurs de fibres optiques de direction A des ports de direction A de chaque dispositif de noeud des au moins deux dispositifs de noeuds, et de longueurs de fibres optiques de direction B des ports de direction B de chaque dispositif de noeud, dans lequel les longueurs de fibres optiques de direction A des ports de direction A du dispositif de noeud sont mutuellement différentes, et les longueurs de fibres optiques de direction B des ports de direction B du dispositif de noeud sont également mutuellement différentes ; la détermination (S120) de correspondances de direction A entre les longueurs de fibres optiques de direction A de chaque dispositif de noeud et les ports de direction A du dispositif de noeud, et de correspondances de direction B entre les longueurs de fibres optiques de direction B de chaque dispositif de noeud et les ports de direction B du dispositif de noeud ; et la détermination (S130) de relations de connexion entre des ports de différents dispositifs de noeuds des au moins deux dispositifs de noeuds conformément à des relations de connexion entre les dispositifs de noeuds des au moins deux dispositifs de noeuds, les correspondances de direction A, et les correspondances de direction B.

2. Procédé selon la revendication 1, dans lequel la détermination de longueurs de fibres optiques de direction A des ports de direction A de chaque dispositif de noeud des au moins deux dispositifs de noeuds, et de longueurs de fibres optiques de direction B des ports de direction B de chaque dispositif de noeud comprend :

la mesure séparée de longueurs de fibres optiques sur chaque port de direction A et chaque port de direction B d'un premier dispositif de noeud, dans lequel le premier dispositif de noeud est n'importe quel dispositif de noeud des au moins deux dispositifs de noeuds ;

la détermination de premiers ports de direction A et de premiers ports de direction B du premier dispositif de noeud, dans lequel les premiers ports de direction A sont des ports de direction A dont les longueurs de fibres optiques mesurées sont mutuellement différentes, et les premiers ports de direction B sont des ports de direction B dont les longueurs de fibres optiques mesurées sont mutuellement différentes ; et

la détermination des longueurs de fibres optiques mesurées sur les premiers ports de direction A en tant que longueurs de fibres optiques de direction A des premiers ports de direction A, et la détermination des longueurs de fibres optiques mesurées sur les premiers ports de direction B en tant que longueurs de fibres optiques de direction B des premiers ports de direction B.

**3.** Procédé selon la revendication 2, dans lequel la détermination de longueurs de fibres optiques de direction A des ports de direction A de chaque dispositif de noeud des au moins deux dispositifs de noeuds, et de longueurs de fibres optiques de direction B des ports de direction B de chaque dispositif de noeud comprend en outre :

la détermination de deuxièmes ports de direction A et de deuxièmes ports de direction B du premier dispositif de noeud, dans lequel les deuxièmes ports de direction A comprennent au moins deux ports de direction A dont les longueurs de fibres optiques mesurées sont identiques et ont une première valeur, et les deuxièmes ports de direction B comprennent au moins deux ports de direction B dont les longueurs de fibres optiques mesurées sont identiques et ont une deuxième valeur ;

la modification de longueurs de fibres optiques des deuxièmes ports de direction A et de longueurs de fibres optiques des deuxièmes ports de direction B, de manière à ce que des longueurs de fibres optiques mesurées sur des ports correspondants d'au moins un deuxième dispositif de noeud connecté aux deuxièmes ports de direction A soient mutuellement différentes, et à ce que des longueurs de fibres optiques mesurées sur des ports correspondants d'au moins un troisième dispositif de noeud connecté aux deuxièmes ports de direction B soient mutuellement différentes ; et

la détermination d'une somme de la première valeur et d'une valeur modifiée d'une longueur de fibre optique d'un deuxième port de direction A en tant que longueur de fibre optique de direction A du deuxième port de direction A, et la détermination d'une somme de la deuxième valeur et d'une valeur modifiée d'une longueur de fibre optique d'un deuxième port de direction B en tant que longueur de fibre optique de direction B du deuxième port de direction B.

**4.** Procédé selon la revendication 3, dans lequel la modification de longueurs de fibres optiques des deuxièmes ports de direction A et de longueurs de fibres optiques des deuxièmes ports de direction B comprend :

l'insertion séparée de jarretières de fibres munies d'une puce dans les deuxièmes ports de direction A et les deuxièmes ports de direction B, de manière à ce que des longueurs de fibres optiques mesurées sur des ports de direction B correspondants d'au moins un deuxième dispositif de noeud connecté aux deuxièmes ports de direction A soient mutuellement différentes, et à ce que des longueurs de fibres optiques mesurées sur des ports de direction A correspondants d'au moins un troisième dispositif de noeud connecté aux deuxièmes ports de direction B soient mutuellement différentes, dans lequel des valeurs modifiées des longueurs de fibres optiques des deuxièmes ports de direction A et des deuxièmes ports de direction B sont des valeurs de longueurs de fibres optiques des jarretières de fibres insérées.

**5.** Procédé selon la revendication 4, dans lequel la détermination de relations de connexion entre des ports de différents dispositifs de noeuds des au moins deux dispositifs de noeuds comprend :

la détermination des relations de connexion entre les ports de différents dispositifs de noeuds des au moins deux dispositifs de noeuds conformément aux relations de connexion entre les dispositifs de noeuds des au moins deux dispositifs de noeuds, et en recherchant des longueurs de fibres optiques de direction A et des longueurs de fibres optiques de direction B ayant une même taille dans une correspondance de direction A du premier dispositif de noeud et une correspondance de direction B du deuxième dispositif de noeud, et/ou dans une correspondance de direction B du premier dispositif de noeud et une correspondance de direction A du dispositif de noeud de troisième.

**6.** Procédé selon l'une quelconque des revendications 1 à 5, dans lequel la détermination de relations de connexion entre des ports de différents dispositifs de noeuds des au moins deux dispositifs de noeuds comprend :

la détermination des relations de connexion entre les ports de différents dispositifs de noeuds des au moins deux dispositifs de noeuds conformément aux relations de connexion entre les dispositifs de noeuds des au moins deux dispositifs de noeuds et aux relations de connexion entre le câble optique et les dispositifs de noeuds, et en recherchant des longueurs de fibres optiques de direction A et des longueurs de fibres optiques de direction B ayant une même taille dans les correspondances de direction A et les correspondances de direction B.

**7.** Procédé selon l'une quelconque des revendications 1 à 5, dans lequel les dispositifs de noeuds des au moins deux dispositifs de noeuds comprennent un répartiteur optique ODF (Optical Distribution Frame) et/ou un terminal de répartition de fibre FDT (Fiber Distribution Terminal).

**8.** Appareil (500, 620, 700) utilisé pour l'appariement de fibres dans un réseau de câbles à fibre optique, dans lequel le réseau de câbles à fibre optique comprend au moins deux dispositifs de noeuds, chaque dispositif de noeud comprend au moins deux ports de direction A ou ports de direction B, les dispositifs de noeuds sont connectés au moyen d'un câble optique, et les deux extrémités de chaque fibre optique contenue dans le câble optique sont respectivement connectées à un port de direction A d'un dispositif de noeud et à un port de direction B d'un autre dispositif de noeud ; **caractérisé en ce que** l'appareil comprend :

un premier module de détermination (510), configuré pour déterminer des longueurs de fibres optiques de direction A des ports de direction A de chaque dispositif de noeud des au moins deux dispositifs de noeuds, et des longueurs de fibres optiques de direction B des ports de direction B de chaque dispositif de noeud, dans lequel les longueurs de fibres optiques de direction A des ports de direction A du dispositif de noeud sent mutuellement différentes, et les longueurs de fibres optiques de direction B des ports de direction B du dispositif de noeud sont également mutuellement différentes ; un deuxième module de détermination (520), configuré pour déterminer des correspondances de direction A entre les longueurs de fibres optiques de direction A de chaque dispositif de noeud, qui sont déterminées par le premier module de détermination et les ports de direction A du dispositif de noeud, et configuré pour déterminer des correspondances de direction B entre les longueurs de fibres optiques de direction B de chaque dispositif de noeud, qui sont déterminées par le premier module de détermination et les ports de direction B du dispositif de noeud ; et un troisième module de détermination (530), configuré pour déterminer des relations de connexion entre des ports de différents dispositifs de noeuds des au moins deux dispositifs de noeuds conformément à des relations de connexion entre les dispositifs de noeuds des au moins deux dispositifs de noeuds, et les correspondances de direction A et les correspondances de direction B qui sont déterminées par le deuxième module de détermination.

**9.** Appareil selon la revendication 8, dans lequel le premier module de détermination (510) comprend :

une unité de mesure (511), configurée pour mesurer séparément des longueurs de fibres optiques sur chaque port de direction A et chaque port de direction B d'un premier dispositif de noeud, dans lequel le premier dispositif de noeud est n'importe quel dispositif de noeud des au moins deux dispositifs de noeuds ; une première unité de détermination (512), configurée pour déterminer des premiers ports de direction A et des premiers ports de direction B du premier dispositif de noeud, dans lequel les premiers ports de direction A sont des ports de direction A dont les longueurs de fibres optiques mesurées par l'unité de mesure sont mutuellement différentes, et les premiers ports de direction B sont des ports de direction B dont les longueurs de fibres optiques mesurées par l'unité de mesure sont mutuellement différentes ; et une deuxième unité de détermination (513), configurée pour déterminer les longueurs de fibres optiques qui sont mesurées, par l'unité de mesure, sur les premiers ports de direction A en tant que longueurs de fibres optiques de direction A qui appartiennent aux premiers ports de direction A et sont déterminées par la première unité de détermination, et déterminer les longueurs de fibres optiques qui sont mesurées, par l'unité de mesure, sur les premiers ports de direction B en tant que longueurs de fibres optiques de direction B qui appartiennent aux premiers ports de direction B et sont déterminées par la première unité de détermination.

**10.** Appareil selon la revendication 9, dans lequel le premier module de détermination comprend en outre :

une troisième unité de détermination (514), configurée pour déterminer des deuxièmes ports de direction A et des deuxièmes ports de direction B du premier dispositif de noeud, dans lequel les deuxièmes ports de direction A comprennent au moins deux ports de direction A dont les longueurs de fibres optiques mesurées sont identiques et ont une première valeur, et les deuxièmes ports de direction B comprennent au moins deux ports de direction B dont les longueurs de fibres optiques mesurées sont identiques et ont une deuxième valeur ;

une unité de traitement (515), configurée pour modifier des longueurs de fibres optiques des deuxièmes ports de direction A déterminés par la troisième unité de détermination, et modifier des longueurs de fibres optiques des deuxièmes ports de direction B déterminés par la troisième unité de détermination, de manière à ce que des longueurs de fibres optiques mesurées sur des ports correspondants d'au moins un deuxième dispositif de noeud connecté aux deuxièmes ports de direction A soient mutuellement différentes, et à ce que des longueurs de fibres optiques mesurées sur des ports correspondants d'au moins un troisième dispositif de noeud connecté aux deuxièmes ports de direction B soient mutuellement différentes ; et

une quatrième unité de détermination (516), configurée pour déterminer une somme de la première valeur et d'une valeur modifiée d'une longueur de fibre optique d'un deuxième port de direction A en tant que longueur de fibre optique de direction A du deuxième port de direction A déterminé par la troisième unité de détermination, et déterminer une somme de la deuxième valeur et d'une valeur modifiée d'une longueur de fibre optique d'un deuxième port de direction B en tant que longueur de fibre optique de direction B du deuxième port de direction B déterminé par la troisième unité de détermination.

**11.** Appareil selon la revendication 10, dans lequel l'unité de traitement est plus précisément configurée pour :

insérer séparément des jarretières de fibres munies d'une puce dans les deuxièmes ports de direction A et les deuxièmes ports de direction B, de manière à ce que des longueurs de fibres optiques mesurées sur des ports de direction B correspondants d'au moins un deuxième dispositif de noeud connecté aux deuxièmes ports de direction A soient mutuellement différentes, et à ce que des longueurs de fibres optiques mesurées sur des ports de direction A correspondants d'au moins un troisième dispositif de noeud connecté aux deuxièmes ports de direction B soient mutuellement différentes, dans lequel des valeurs modifiées des longueurs de fibres optiques des deuxièmes ports de direction A et des deuxièmes ports de direction B sont des valeurs de longueurs de fibres optiques des jarretières de fibres insérées.

**12.** Appareil selon la revendication 11, dans lequel le troisième module de détermination comprend :

une cinquième unité de détermination (531), configurée pour déterminer les relations de connexion entre les ports de différents dispositifs de noeuds des au moins deux dispositifs de noeuds conformément aux relations de connexion entre les dispositifs de noeuds des au moins deux dispositifs de noeuds, et en recherchant des longueurs de fibres optiques de direction A et des longueurs de fibres optiques de direction B ayant une même taille dans une correspondance de direction A du premier dispositif de noeud et une correspondance de direction B du deuxième dispositif de noeud, et/ou dans une correspondance de direction B du premier dispositif de noeud et une correspondance de direction A du dispositif de noeud de troisième.

**13.** Appareil selon l'une quelconque des revendications 8 à 12, dans lequel le troisième module de détermination comprend :

une sixième unité de détermination (532), configurée pour déterminer les relations de connexion entre les ports de différents dispositifs de noeuds des au moins deux dispositifs de noeuds conformément aux relations de connexion entre les dispositifs de noeuds des au moins deux dispositifs de noeuds et aux relations de connexion entre le câble optique et les dispositifs de noeuds, et en recherchant des longueurs de fibres optiques de direction A et des longueurs de fibres optiques de direction B ayant une même taille dans les correspondances de direction A et les correspondances de direction B.

**14.** Appareil selon l'une quelconque des revendications 8 à 12, dans lequel les dispositifs de noeuds des au moins deux dispositifs de noeuds comprennent un répartiteur optique ODF et/ou un terminal de répartition de fibre FDT.

**15.** Réseau câblé à fibre optique (600), comprenant :

au moins deux dispositifs de noeuds (610), dans lequel chaque dispositif de noeud comprend au moins deux ports de direction A ou ports de direction B, les dispositifs de noeuds sont connectés au moyen d'un câble optique, et les deux extrémités de chaque fibre optique contenue dans le câble optique sont respectivement connectées à un port de direction A d'un dispositif de noeud et à un port de direction B d'un autre dispositif de noeud ;

l'appareil (500, 620, 700) selon l'une quelconque des revendications 8 à 14 ; et

un réseau de communication de données DCN (Data Communication Network) (630), dans lequel le réseau DCN communique avec, et est connecté aux au moins deux dispositifs de noeuds, et communique avec et est connecté à l'appareil, et dans lequel le DCN est configuré pour transférer des informations de commande et/ou des informations de gestion entre les au moins deux dispositifs de noeuds et l'appareil.

FDT 1    FDT 2

L2

L1  [B|A]═══[B|A]

ODF 0 [A]
        [B]

FDT

Ln+1 [A|B]═══[A|B]

        Ln

FDT n    FDT n-1

FIG. 1

100

Determine direction-A optical fiber lengths of direction-A ports of each node device of the at least two node devices, and direction-B optical fiber lengths of direction-B ports of each node device, where the direction-A optical fiber lengths of the direction-A ports of the node device are mutually different, and the direction-B optical fiber lengths of the direction-B ports of the node device are also mutually different — S110

Determine direction-A correspondences between the direction-A optical fiber lengths of each node device and the direction-A ports of the node device, and direction-B correspondences between the direction-B optical fiber lengths of the node device and the direction-B ports of the node device — S120

Determine connection relationships between ports of different node devices of the at least two node devices according to connection relationships between the node devices of the at least two node devices, the direction-A correspondences, and the direction-B correspondences — S130

FIG. 2

110

Separately measure optical fiber lengths at each direction-A port and each direction-B port of a first node device, where the first node device is any node device of the at least two node devices ⎬ S111

Determine first direction-A ports and first direction-B ports of the first node device, where the first direction-A ports are direction-A ports whose measured optical fiber lengths are mutually different, and the first direction-B ports are direction-B ports whose measured optical fiber lengths are mutually different ⎬ S112

Determine the optical fiber lengths measured at the first direction-A ports as direction-A optical fiber lengths of the first direction-A ports, and determine the optical fiber lengths measured at the first direction-B ports as direction-B optical fiber lengths of the first direction-B ports ⎬ S113

FIG. 3

110

| Determine second direction-A ports and second direction-B ports of the first node device, where the second direction-A ports include at least two direction-A ports whose measured optical fiber lengths are the same and are a first value, and the second direction-B ports include at least two direction-B ports whose measured optical fiber lengths are the same and are a second value | S114 |

| Change optical fiber lengths of the second direction-A ports and optical fiber lengths of the second direction-B ports, so that optical fiber lengths measured at corresponding ports of at least one second node device connected to the second direction-A ports are mutually different, and optical fiber lengths measured at corresponding ports of at least one third node device connected to the second direction-B ports are mutually different | S115 |

| Determine a sum of the first value and a changed value of an optical fiber length of a second direction-A port as a direction-A optical fiber length of the second direction-A port, and determine a sum of the second value and a changed value of an optical fiber length of a second direction-B port as a direction-B optical fiber length of the second direction-B port | S116 |

FIG. 4

EP 2 940 502 B1

FIG. 5A

FIG. 5B

Start

S201. Select direction-A ports or direction-B ports of a node device

S202. Measure optical fiber lengths at the direction-A ports or direction-B ports

S203. Group the optical fiber lengths: classify ports with a same optical fiber length into one group

S204. Determine whether each group includes two or more members

No

Yes

S205. Connect fiber patch cords to ports according to instructions

TO
FIG. 6B

TO
FIG. 6B

TO
FIG. 6B

TO
FIG. 6B

FIG. 6A

CONT.
FROM
FIG. 6A

CONT.
FROM
FIG. 6A

CONT.
FROM
FIG. 6A

CONT.
FROM
FIG. 6A

No

S206. Determine
whether an operation of
measuring optical fiber lengths of
the direction-A ports and direction-
B ports of the selected node
device is complete

No

Yes

S207. Determine
whether an operation of
measuring optical fiber
lengths for all node devices
is complete

No

S208.
Switch
between
node
devices

Yes

S209. Process data and output connection relationships
between ports

End

FIG. 6B

Apparatus 500

First determining module 510 — Second determining module 520 — Third determining module 530

FIG. 7

First determining module 510

Measuring unit 511 — First determining unit 512 — Second determining unit 513

FIG. 8

First determining module 510

Third determining unit 514 — Processing unit 515 — Fourth determining unit 516

FIG. 9

Third determining module 530

| Fifth determining unit 531 | Sixth determining unit 532 |

FIG. 10

Optical fiber cable network 600

Apparatus 620

Node device 610

DCN 630

Node device 610

Optical fiber cable

FIG. 11

Apparatus 700

Processor
710

Memory 720

730

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5821510 A
- CN 102684784 A

- WO 2008076235 A1